# EUROPÄISCHE PATENTANMELDUNG

(11) **EP 4 703 251 A1**
(43) Veröffentlichungstag der Anmeldung: **04.03.2026**
(21) Anmeldenummer: 24196381.8
(22) Anmeldetag: 26.08.2024
(51) Int. Cl.: B62K 25/28, B62M 6/55, B62M 11/00, B62M 11/18, B62M 6/70, B62M 9/02, B62M 11/06

(54) **FAHRRAD**

(71) Anmelder: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Gramm, Lins & Partner Patent- und Rechtsanwälte PartGmbB

(57) **Zusammenfassung**

Die Erfindung betrifft ein Fahrrad (10), mit einer Hinterrad-Antriebsscheibe (51), die eine Hinterradantriebsscheiben-Drehachse (53) hat, zum Antreiben eines Hinterrads, einem Pedalantrieb (20), der eine Tretlagerwelle (21) hat, wobei die Hinterradantriebscheibendrehachse (53) von der Tretlagerwelle (21) um einen Achsversatz beabstandet ist, wobei die Hinterradantriebscheibendrehachse (53) sich oberhalb der Tretlagerwelle (21) befindet und wobei der Achsversatz minimal 70 mm, insbesondere minimal 90 mm, und maximal 175 mm beträgt, insbesondere maximal 120 mm.

## Beschreibung

Die Erfindung betrifft ein Fahrrad. Fahrräder mit Hilfsantrieb unterstützen den Radfahrer, insbesondere beim Treten der Pedale mittels des Hilfsantriebs. Sie erleichtern das Zurücklegen langer Strecken, das Bergauffahren und können in der Freizeit, im Beruf und für den Weg zur Arbeit eingesetzt werden.

Wenn der Hilfsantrieb einen Elektromotor hat, wird das Fahrrad auch als Elektrofahrrad oder E-Bike bezeichnet. Die Energieversorgung des Elektromotors erfolgt in der Regel über einen Akkumulator, der beispielsweise am Rahmen des Fahrrads vor und oberhalb des Tretlagers angeordnet ist.

Wünschenswert ist, dass mit dem Fahrrad verschiedene Geschwindigkeitsstufen mit annähernd konstanter Pedaliergeschwindigkeit gefahren werden können. Dazu werden Fahrräder mit einer Gangschaltung verwendet. Durch die Gangschaltung kann zwischen verschiedenen Gangstufen gewechselt werden, je nach Fahrgeschwindigkeit.

Wünschenswert ist zudem, dass mit dem Fahrrad Kurven mit hoher Geschwindigkeit gefahren werden können, ohne dass das Fahrrad seitlich ausbricht. Deshalb wird angestrebt, dass der Schwerpunkt des Fahrrads annähernd dem geometrischen Schwerpunkt des Fahrrads entspricht.

Zumal ist es günstig, wenn das Drehträgheitsmoment klein ist, um schnell Kurven fahren zu können. Dies ist jedoch schwierig umzusetzen, da bei Fahrrädern mit Hilfsantrieb, insbesondere bei Elektrofahrrädern, der Hilfsantrieb und weitere Bauteile wie der Akku und die Gangschaltung ein hohes Gewicht aufweisen und gleichzeitig viel Platz benötigen. Deshalb können diese nur mit Einbußen bei der Leistungsfähigkeit alle zugleich nahe dem geometrischen Schwerpunkt des Fahrrads angeordnet werden.

Dieses Problem ist am stärksten bei Speed-Pedelecs, da diese eine hohe Motorleistung von bis zu 4 kW und meist einen Akku mit langer Reichweite von in der Regel zwischen 80 km und 200 km haben. Aufgrund der hohen Motor- und Akkuleistung sind der Elektromotor und Akku besonders schwer und groß. Daraus ergibt sich das Problem, wie diese möglichst nah an dem geometrischen Schwerpunkt des Fahrrads angeordnet werden können. Zudem bleibt dann weniger Platz für die Gangschaltung.

Eine kleinere Gangschaltung ist jedoch meist damit verbunden, dass es weniger verschiedene Gangstufen gibt. Dadurch ist jedoch nicht mehr möglich, bei einer großen Bandbreite von Geschwindigkeiten komfortabel, mit annähernd konstanter Pedaliergeschwindigkeit zu fahren.

Aufgabe der vorliegenden Erfindung ist es, ein Fahrrad mit Hilfsantrieb bereitzustellen, das die Nachteile im Stand der Technik verringert.

Erfindungsgemäß gelöst wird die Aufgabe durch ein Fahrrad mit den Merkmalen von Anspruch 1.

Die Erfindung löst das Problem zudem durch ein Fahrrad, insbesondere ein Zweirad, mit (a) einem Hilfsantrieb, (b) einem Pedalantrieb, der eine Tretlagerwelle hat, (c) einem Schaltgetriebe, das (i) eine Schaltgetriebe-Eingangswelle und (ii) eine Schaltgetriebe-Ausgangswelle hat, (d) einem Hinterrad, und (e) einem Hinterrad-Zugmitteltrieb, der (i) eine Hinterrad-Antriebsscheibe, die, insbesondere drehstarr, mit der Schaltgetriebe-Ausgangswelle mittelbar verbunden ist, aufweist, (ii) wobei die Hinterrad-Abtriebsscheibe mit dem Hinterrad, insbesondere drehstarr, verbunden ist, bei dem ein Hinterradtrieb-Übersetzungsverhältnis des Hinterrad-Zugmitteltriebs betragsmäßig größer als eins ist, insbesondere ins Langsame übersetzt ist. Vorzugsweise ist die Tretlagerwelle mit dem Schaltgetriebe über ein Pedalgetriebe verbunden. Verbunden meint insbesondere, dass die genannten Getriebe direkt oder mittelbar miteinander in drehmomentübertragender Verbindung stehen. Die Merkmale dieses Fahrrads sind bevorzugte Merkmale des Fahrrads mit den Merkmalen von Anspruch 1.

Die Erfindung bezieht sich vorzugsweise auf Fahrräder, bei denen der Pedalantrieb bezüglich zumindest einer Drehrichtung drehstarr mit der Hinterrad-Antriebsscheibe verbunden ist. Hierunter wird insbesondere verstanden, dass auf die Hinterrad-Antriebsscheibe stets ein Drehmoment wirkt, dass durch eine mechanische Kopplung zwischen Hinterrad-Antriebsscheibe und Pedalantrieb vom Pedalantrieb auf die Hinterrad-Antriebsscheibe übertragen wird. Insbesondere besitzen die Tretlagerwelle und das Hinterrad mechanisch zueinander eine Kopplung und sind mechanisch nicht unabhängig voneinander.

Im Rahmen der vorliegenden Beschreibung wird unter einem Fahrrad insbesondere ein pedalbetriebenes Fahrzeug mit einer Aufhängung für zwei bis vier Räder verstanden, insbesondere für zwei bis drei Räder, insbesondere für zwei Räder. Das Fahrrad ist auch dann ein Fahrrad, wenn ein oder mehrere der Räder demontiert sind. Vorzugsweise besitzt das Fahrrad zwei bis vier Räder, insbesondere zwei bis drei Räder, insbesondere genau zwei Räder.

Das Fahrrad hat vorzugsweise einen Rahmen mit einer Schwinge, einem Sattelrohr zur Befestigung eines Sattels, einem Steuerrohr zur Befestigung eines Lenkers und Anschlussrohre für die Räder. Optional weist der Rahmen ferner ein Oberrohr auf. Das Fahrrad ist auch dann ein Fahrrad, wenn der Sattel und/oder Lenker demontiert sind. Vorzugsweise besitzt das Fahrrad einen Sattel und/oder einen Lenker.

Unter einem Hilfsantrieb wird insbesondere ein Antrieb verstanden, der zusätzlich zu dem Pedalantrieb ein Drehmoment auf das Hinterrad des Fahrrads überträgt. Der Hilfsantrieb ist vorzugsweise ein Elektroantrieb. Der Hilfsantrieb hat vorzugsweise keinen Verbrennermotor. Wenn der Hilfsantrieb ein Elektroantrieb ist, weist er einen Elektromotor auf. Der Elektromotor hat eine Elektromotorwelle an, die, vorzugsweise mittelbar, mit der Hinterradantriebsscheibe in drehmomentübertragender Verbindung steht.

Der Hilfsantrieb und der Pedalantrieb sind vorzugsweise dazu eingerichtet, gemeinsam die Hinterrad-Antriebsscheibe anzutreiben. Dazu stehen vorzugsweise der Pedalantrieb und der Hilfsantrieb, insbesondere die Elektromotorwelle, in drehmomentübertragender Verbindung mit der Hinterradantriebsscheibe.

Der Hilfsantrieb ist vorzugsweise dazu eingerichtet, beim Pedalieren das durch das Pedalieren auf das Hinterrad ausgeübte Drehmoment zu vergrößern. Vorzugsweise wird das Drehmoment über beispielsweise mindestens ein zwischengeschaltetes Getriebe, beispielsweise ein Reduziergetriebe, auf die Hinterrad-Antriebsscheibe oder auf das Schaltgetriebe übertragen.

Die Pedale übertragen ein Drehmoment auf die Tretlagerwelle und von dort über das Pedalgetriebe auf die Schaltgetriebe-Eingangswelle. Das Pedalgetriebe ist beispielsweise ein Zahnradgetriebe oder ein Zugmittelgetriebe, beispielsweise ein Riementrieb, beispielsweise mit einem Zahnriemen und zumindest, insbesondere genau, zwei oder drei Riemenscheiben.

Durch das Hinterradtrieb-Übersetzungsverhältnis von betragsmäßig größer als eins treibt der Hinterrad-Zugmitteltrieb ins Langsame. Damit ist gemeint, dass das Hinterrad im Betrieb mit einer langsameren Drehzahl rotiert als die Hinterrad-Antriebsscheibe. Daraus ergibt sich der Vorteil, dass die übertragenen Drehmomente klein sind, sodass benötigter Bauraum und Gewicht reduziert werden können. Zudem ergibt sich der Vorteil, dass das Kurvenfahren durch ein vergleichsweise geringes Drehträgheitsmoment, sportliche Fahren in unebenem Gelände und das Tragen des Fahrrads erleichtert wird. Vorzugsweise ist das Hinterrad gefedert.

Der Hinterrad-Zugmitteltrieb hat eine Hinterrad-Antriebsscheibe, die das Drehmoment über das Zugmittel des Hinterrad-Zugmitteltriebs auf die Hinterrad-Abtriebsscheibe überträgt. Die Hinterrad-Antriebsscheibe wird von dem Hilfsantrieb und/oder dem Pedalantrieb angetrieben, vorzugsweise über mindestens ein zwischengeschaltetes Getriebe. Das Zugmittel ist beispielsweise eine Kette oder ein Riemen, insbesondere ein Zahnriemen.

Das erfindungsgemäße Fahrrad hat den Vorteil, dass der Masseschwerpunkt des Fahrrads nahe an dem geometrischen Schwerpunkt liegen kann und das Drehträgheitsmoment vergleichsweise gering ist. Dies ist auch dann noch der Fall, wenn der Hilfsantrieb und/oder ein Akku zur Energieversorgung des Hilfsantriebs in der Nähe des Tretlagers angeordnet sind. Dadurch ist es leichter, mit hoher Geschwindigkeit Kurven zu fahren oder das Fahrrad zu tragen. Außerdem ist es dadurch möglich, dass eine Hinterbaulänge des Fahrrads, das heißt der Abstand zwischen der Tretlagerwelle und der Hinterradnabe, gering ist. Dadurch ist eine effektive Federung der Hinterradnabe möglich. Zusätzlich verbessert sich die Handlichkeit beim Lenken des Fahrzeugs.

Das Fahrrad hat insbesondere keine Nabenschaltung oder Kettenschaltung als Gangschaltung.

Dadurch werden die Nachteile von herkömmlichen Elektrofahrrädern vermindert. Aufgrund des Platzmangels bei Elektrofahrrädern, bei denen der Hilfsantrieb mit Elektromotor im Bereich des Tretlagers oder nahe an dem geometrischen Schwerpunkt des Fahrrads angeordnet ist, werden als Gangschaltung bislang meist Kettenschaltungen oder Nabenschaltungen verwendet. Die Nachteile von Kettenschaltungen sind, dass einige Komponenten wie beispielsweise die Ritzel an der Hinterradnabe, das Kettenblatt, die Kette und/oder der Kettenumwerfer ungeschützt sind. Dadurch ergibt sich ein schnellerer Verschleiß und höherer Wartungsaufwand. Zudem erhöht eine Nabenschaltung die ungefederte Masse des Fahrrads.

Einen besseren Schutz vor Verschleiß bieten Nabenschaltungen, die anstelle von oder zusammen mit Kettenschaltungen am Hinterrad verwendet werden können. Nabenschaltungen sind von der Außenumgebung abgekapselt in einem Gehäuse angeordnet und daher weitgehend wartungsfrei. Nachteilig ist jedoch bei Nabenschaltungen das hohe Gewicht am Hinterrad, das zu einer ungünstigen Gewichtsverteilung führt. Sowohl beim Tragen des Fahrrads als auch bei Kurvenfahrten oder bei sportlicher Fahrt im Gelände ist das hohe Gewicht an der Hinterradnabe störend.

Vorzugsweise besitzt das Fahrrad einen Akku, dies ist aber nicht notwendig. Der Hilfsantrieb ist vorzugsweise am Tretlager oder angrenzend dazu angeordnet, beispielsweise an einem Unterrohr des Rahmens des Fahrrads. Dies ist durch den Masseschwerpunkt nahe an dem geometrischen Schwerpunkt des Fahrrads vorteilhaft gegenüber einer Anordnung an einer Hinterradnabe des Hinterrads, wie es häufig bei Speed-Pedelecs nach dem Stand der Technik nachteilig umgesetzt wird.

Zudem werden bei der Anordnung des Hilfsantriebs an der Hinterradnabe meist Kettentriebe zur Kraftübertragung auf das Hinterrad verwendet. Daraus ergeben sich die

Nachteile von schnellem Verschleiß, hohem Wartungsaufwand sowie hörbaren Geräuschen während des Fahrens. Diese Nachteile treten bei gefederten Fahrrädern in stärkerem Ausmaß auf. Ferner ist eine funktionstüchtige Hinterradfederung aufgrund des großen Gewichts des Hinterrads mit Hilfsantrieb meist schlecht realisierbar.

Im Gegensatz hat bei dem erfindungsgemäßen Fahrrad das Hinterrad ein geringes Gewicht, da das Schaltgetriebe im Tretlagerbereich angeordnet ist. Dadurch ist es möglich, eine effektive Federung des Hinterrads einzusetzen. Außerdem werden die Nachteile des Kettentriebs zum Hinterrad erfindungsgemäß mittels des Hinterrad-Zugmitteltriebs überwunden.

Eine Ausführungsform betrifft ein Fahrrad, bei dem das Pedalgetriebe ein Zahnradgetriebe oder ein Zugmittelgetriebe, insbesondere ein Zahnriementrieb ist. Vorzugsweise hat das Pedalgetriebe ein Übersetzungsverhältnis, das betragsmäßig kleiner als 1 ist. Dadurch treibt das Pedalgetriebe ins Schnelle. Damit ist gemeint, dass die Tretlagerwelle im Betrieb mit einer langsameren Drehzahl rotiert als die Schaltgetriebeeingangswelle. Die Schaltgetriebebauteile laufen mit höherer Drehzahl und werden mit weniger Drehmoment belastet. Daraus ergibt sich der Vorteil, dass Platz und Gewicht eingespart werden können. Somit bleibt genug Platz im Tretlagerbereich für den Hilfsantrieb.

Ferner ist beispielsweise ein Akkumulator zur Energieversorgung des Hilfsantriebs unweit des Hilfsantriebs und damit in Tretlagernähe anord bar. Der Vorteil davon ist, dass der Schwerpunkt des Fahrrads annähernd im geometrischen Schwerpunkt des Fahrrads liegt und dadurch das Drehträgheitsmoment vergleichsweise gering ist. Dadurch ist es leichter, in unebenem Gelände und in Kurven mit hoher Geschwindigkeit zu fahren sowie das Fahrrad zu tragen. Der Akkumulator hat bei eine Akkukapazität von vorzugsweise mindestens 400 Wh, insbesondere zumindest 700 Wh. Bei einem Speed-Pedelec oder einem Fahrzeug in der Klasse L1e kann der Energieinhalt des Akkumulators bis zu 2300 Wh betragen.

Eine Ausführungsform betrifft ein Fahrrad, das eine Schwinge aufweist, an der das Hinterrad gelagert ist. Wenn die Hinterradantriebsscheiben-Drehachse der Hinterrad-Antriebsscheibe nicht koaxial zu einem Schwingen-Momentandrehpunkt der Schwinge angeordnet ist, kann die Schwinge bei schmaler Bauform sehr steif, haltbar und mit wenig Masse ausgestaltet werden. Eine steife und leichte Schwinge ist die Grundvoraussetzung für ein verdrehsteifes Fahrwerk mit geringerer ungefederter Masse.

Vorzugsweise ist die Schwinge in einer Schwingen-Lagerung am Rahmen des Fahrrads gelagert. Insbesondere hat die Schwinge ein freies Ende, an dem das Hinterrad befestigt ist. Vorzugsweise hat die Schwinge eine mittelbare Verbindung zu einer eine Schwingen-Feder und/oder einen Dämpfer zum Vorspannen der Schwinge in eine Ruhelage. Daraus ergibt sich der Vorteil, dass die Federung bei entsprechender Fahrt über unebenes Gelände mit viel Federweg gut arbeiten und dadurch Stöße und/oder Schwingungen besser dämpfen kann.

Vorzugsweise ist eine Hinterradantriebsscheiben-Drehachse der Hinterrad-Antriebsscheibe von einer Schwingen-Momentanschwenkachse, um die die Schwinge schwenkt, beabstandet. Daraus ergibt sich der Vorteil, dass das Fahrrad schmaler gebaut werden kann.

Beispielsweise weist das Fahrrad eine Federung auf, die insbesondere von der Schwinge verschieden ist, beispielsweise eine Vorderrad-Federung.

Eine Ausführungsform betrifft ein Fahrrad, bei dem das Schaltgetriebe zumindest ein schaltbares Teilgetriebe aufweist, das insbesondere ein Planetengetriebe ist. Durch die Verwendung eines Planetengetriebes sind vorteilhaft größere Drehmomente relativ zur Baugröße und zum Gewicht übertragbar als bei anderen Getrieben. Dadurch kann Platz und Gewicht eingespart werden und dennoch eine hohe Anzahl Gangstufen bereitgestellt werden.

Dadurch ergibt sich der Vorteil, dass der Masseschwerpunkt des Fahrrads nahe an dem geometrischen Schwerpunkt liegt, sodass es leichter ist, das Fahrrad zu tragen und Kurven mit hoher Geschwindigkeit zu fahren aufgrund des vergleichsweise geringen Drehträgheitsmoments. Ferner weisen Planetengetriebe in bestimmten Gangstufen vorteilhaft einen höheren Wirkungsgrad auf als andere Getriebe.

Vorzugsweise weist das Fahrrad mindestens drei, vorzugsweise mindestens sechs, vorzugsweise mindestens neun Gangstufen auf. Vorzugsweise weist das Fahrrad maximal 18 Gangstufen auf, vorzugsweise maximal 14.

Vorzugsweise weist das Planetengetriebe in jedem Teilgetriebe mindestens zwei Planetenräder auf, insbesondere drei Planetenräder. Die Planetenräder rotieren um die Schaltachse. Vorzugsweise hat das Planetengetriebe in jedem Teilgetriebe mindestens ein Sonnenrad.

Vorzugsweise sind die Schaltgetriebe-Eingangswelle und Schaltgetriebe-Ausgangswelle koaxial. Dadurch wird Platz und Masse eingespart.

Vorzugsweise weist das Fahrrad genau zwei schaltbare Planetengetriebe auf. Auf diese Weise sind zwei Teilgetriebe in Reihe geschaltet. Dadurch ist ein Kompromiss zwischen wenig Gewicht und Bauraum bei gleichzeitig hoher Anzahl von Gangstufen möglich, beispielsweise sind mit zwei schaltbaren Planetengetrieben neun Gangstufen möglich.

Vorzugsweise ist die Eingangswelle des ersten Planetengetriebes die Schaltgetriebe-Eingangswelle. Vorzugsweise ist die Ausgangswelle des zweiten Planetengetriebes die Schaltgetriebe-Ausgangswelle. Dadurch wird Platz und Gewicht eingespart und eine sichere Drehmomentübertragung gewährleistet.

Eine Ausführungsform betrifft ein Fahrrad, bei dem das Schaltgetriebe zumindest zwei schaltbare Planetengetriebe aufweist, die in Reihe geschaltet sind. Dadurch ist eine hohe Anzahl an Gangstufen mit wenig Aufwand an Gewicht, Platz und Kosten möglich. Beispielsweise sind mittels zwei in Reihe geschalteter Planetengetriebe, die in der Summe nur aus zwei Hohlrädern, drei Sonnenrädern und sechs Planetenrädern aufgebaut sind, neun Gangstufen realisierbar. Dadurch ist eine Einsparung an Gewicht und Platz gegenüber herkömmlichen Fahrradschaltungen mit vergleichbarer Gangstufenzahl möglich.

Eine Ausführungsform betrifft ein Fahrrad, bei dem die Schaltgetriebe-Eingangswelle von der Tretlagerwelle um einen Achsversatz beabstandet ist. Vorzugsweise ist die Schaltgetriebe-Ausgangswelle oberhalb der Tretlagerwelle angeordnet. Oberhalb bezieht sich auf die Anordnung bei Ausrichtung des Fahrrads wie beim Fahrbetrieb, mit den Rädern bzw. Pedalen in Richtung Boden und dem Sattel bzw. dem Sattelrohr nach oben.

Vorzugsweise beträgt der Achsversatz minimal 70 mm und maximal 175 mm, vorzugsweise minimal 90 mm, vorzugsweise maximal 120 mm. Dadurch ist eine kurze Hinterbaulänge realisierbar. Dadurch ist eine vorteilhafte Schwerpunktposition des Fahrrads realisierbar. Diese erleichtert das Tragen und Befahren von bergigem Gelände sowie das Realisieren einer effektiven Hinterradfederung. Zusätzlich wird am Hinterrad eine gegenüber dem Stand der Technik verbesserte Raderhebungskurve erreicht, die für ein besseres Federungsverhalten sorgt.

Vorzugsweise ist der Hilfsantrieb ein Elektroantrieb ist, der einen Elektromotor und ein Reduziergetriebe hat. Das Reduziergetriebe ist dazu eingerichtet, die Drehzahl des Elektromotors zu reduzieren. Der Elektromotor hat insbesondere eine Elektromotorwelle. Vorzugsweise hat das Reduziergetriebe eine Reduziergetriebe-Eingangswelle, die von der Elektromotorwelle angetrieben wird.

Vorzugsweise hat das Reduziergetriebe ferner eine Reduziergetriebe-Ausgangswelle, die insbesondere direkt auf die Schaltgetriebe-Eingangswelle wirkt. Direkt meint, dass es kein zwischengeschaltetes Getriebe gibt. Der Vorteil ist, dass Bauraum und Gewicht eingespart wird. Das ist besonders günstig bei Elektromotoren mit höchstens 400 W Nenn-Dauerleistung.

Je nach der Motorleistung und der unterstützten Maximalgeschwindigkeit ist das Fahrrad beispielsweise ein Speed-Pedelec oder L1e-B-Fahrzeug. Ein L1e-B-Fahrzeug besitzt eine bauartbedingte Höchstgeschwindigkeit von kleiner oder gleich 45 Kilometer pro Stunde und eine maximale Dauernennleistung von 4000 Watt. Ein Speed-Pedelec ist ein Fahrzeug, welches ebenfalls eine bauartbedingte Höchstgeschwindigkeit von kleiner oder gleich 45 Kilometer pro Stunde besitzt. Die Dauernennleistung eines Speed-Pedelecs ist vorzugsweise kleiner 1500 Watt.

Das Reduziergetriebe ist vorzugsweise ein Stirnradgetriebe oder Zugmittelgetriebe. Das Reduziergetriebe ist vorzugsweise nicht schaltbar. Das reduziert die Komplexität des Fahrrads.

Eine Ausführungsform betrifft ein Fahrrad, bei dem der Hilfsantrieb direkt auf die Schaltgetriebe-Ausgangswelle oder im Drehmomentfluss dahinter wirkt. Direkt meint, dass es kein zwischengeschaltetes Getriebe gibt. Im Drehmomentfluss dahinter wirkend meint, wirkend auf eines der Fahrradteile, auf die das Drehmoment von der Schaltgetriebe-Ausgangswelle mittelbar, über mindestens ein zwischengeschaltetes Getriebe, übertragen wird.

Wenn der Hilfsantrieb einen Elektromotor hat, hat der Elektromotor in diesem Fall vorzugsweise eine Nenn-Dauerleistung, die maximal 6 kW, vorzugsweise maximal 4 kW beträgt. Vorzugsweise unterstützt der Elektromotor den Pedalantrieb in diesem Fall bis zu einer Maximalgeschwindigkeit von mindestens 25 km/h, vorzugsweise maximal 50 km/h, vorzugsweise maximal 45 km/h.

Dies hat den Vorteil, dass insbesondere bei hoher Motorleistung beispielsweise bei Speed-Pedelecs, der Motor das Drehmoment nicht auf die Schaltgetriebe-Eingangswelle überträgt. Sonst müsste das Schaltgetriebe für hohe Drehmomente ausgelegt sein, was zu höheren Kosten, Platzbedarf und Gewicht führen würde.

Eine Ausführungsform betrifft ein Fahrrad, bei dem die Schaltgetriebeeingangswellen-Drehachse in Fahrtrichtung des Fahrrads vor einer Hinterradantriebsscheiben-Drehachse der Hinterradantriebsscheibe liegt oder koaxial zu ihr angeordnet ist. Dadurch ist eine vorteilhafte Masseschwerpunktposition des Fahrrads nahe dem geometrischen Schwerpunkt realisierbar. Diese erleichtert das Tragen und Befahren von bergigem Gelände und Kurven mit hoher Geschwindigkeit sowie das Realisieren einer effektiven Hinterradfederung. Zusätzlich kann der Stoßdämpfer in vorteilhafter Weise im Rahmen des Fahrzeugs angeordnet werden.

Vorzugsweise ist eine Elektromotorwellen-Drehachse der Elektromotorwelle oberhalb der Tretlagerwellen-Drehachse angeordnet. Vorzugsweise ist die Elektromotorwellen-Drehachse in Fahrtrichtung vor der Tretlagerwellen-Drehachse angeordnet. Vorzugsweise ist die Elektromotorwellen-Drehachse unterhalb und in Fahrtrichtung vor einer Hinterradantriebsscheibenwellen-Drehachse der Hinterrad-Antriebsscheibe angeordnet. Vorzugsweise ist die Hinterradantriebsscheiben-Drehachse oberhalb der Hinterradabtriebsscheiben-Drehachse angeordnet.

Durch jeden der eben genannten Punkte ist der Vorteil gegeben, dass die Hinterbaulänge geringer ist. Dadurch ist der Masseschwerpunkt des Fahrrads vorteilhaft nahe dem geometrischen Schwerpunkt. Dadurch wird das Tragen des Fahrrads und das Fahren von Kurven sowie in bergigem Gelände mit hoher Geschwindigkeit erleichtert. Die Handlichkeit des Fahrzeugs beim Lenken wird durch die kurze Hinterbaulänge vorteilhaft beeinflusst. Bei Fahrzeugen für den Geländeeinsatz ist es zum Überfahren von Hindernissen vorteilhaft eine Hohe Bodenfreiheit am Fahrzeug zu haben. Wenn die Elektromotorwellen-Drehachse der Elektromotorwelle oberhalb und in Fahrtrichtung vor der Tretlagerwellen-Drehachse liegt kann die Bodenfreiheit vorteilhaft hoch ausgestaltet werden. Eine weitere vorteilhafte Verbesserung für die Bodenfreiheit des Fahrzeugs wird erreicht, wenn die Hinterradantriebsscheiben-Drehachse oberhalb einer Hinterradabtriebsscheiben-Drehachse der Hinterradabtriebsscheibe liegt.

Ferner ist dadurch Platz im Tretlagerbereich und insbesondere im Bereich in Fahrtrichtung vor dem Tretlager verfügbar. Dadurch ist mehr Bauraum für den Elektromotor und/oder von mindestens einem Stoßdämpfer, vorzugsweise oberhalb des Elektromotors, verfügbar.

Eine Ausführungsform betrifft ein Fahrrad, bei dem die Schaltgetriebe-Eingangswelle in Fahrtrichtung des Fahrrads vor der Tretlagerwelle liegt. Vorzugsweise liegt die Schaltgetriebe-Eingangswelle mindestens 60 mm vor der Tretlagerwelle. Vorzugsweise liegt die Schaltgetriebe-Eingangswelle maximal 250 mm vor der Tretlagerwelle. Vorzugsweise liegt die Schaltgetriebe-Eingangswelle maximal 180 mm vor der Tretlagerwelle, vorzugsweise maximal 100 mm. Dadurch bleibt mehr Bauraum im Bereich der Tretlagerwelle verfügbar, beispielsweise damit der Elektromotor mittelbar mit der Schaltgetriebe-Ausgangswelle verbindbar ist.

Dies ist beispielsweise bei Speed-Pedelecs und L1E-Fahrrädern vorteilhaft. Unter L1E-Fahrrad wird ein Fahrrad mit Elektromotor verstanden, das unter die Kategorie L1E-A oder L1E-B nach Richtlinie 168/2013/EG fällt.

In diesem Fall ist es vorteilhaft, wenn ein Drehmoment des Elektromotors auf das Schaltgetriebe, insbesondere die Schaltgetriebe-Ausgangswelle, übertragen wird, vorzugsweise mit mindestens einem zwischengeschalteten Getriebe, beispielsweise einem Reduziergetriebe.

Bei L1E-B-Fahrrädern unterstützt der Elektroantrieb Geschwindigkeiten bis 45 km/h, und die Nenn-Dauerleistung beträgt maximal 4 kW. Dazu gehört auch die Unterklasse der Speed-Pedelecs. In diesem Fall ist es vorteilhaft, wenn der Elektromotor im Drehmomentfluss hinter dem Schaltgetriebe liegt. Das meint, dass ein Drehmoment des Elektromotors nicht auf das Schaltgetriebe übertragen wird. Stattdessen wird beispielsweise das Drehmoment des Elektromotors über ein Reduziergetriebe auf die Hinterrad-Antriebsscheibe übertragen. Dadurch ist eine Drehmomentübertragung von dem leistungsstarken Elektromotor möglich, ohne dass das Schaltgetriebe große Drehmomente und/oder Drehzahlen aufne hmen müsste. Dadurch ist es nicht erforderlich, ein spezielles, stärkeres Schaltgetriebe zu verwenden, trotz der hohen Motorleistung.

Eine Ausführungsform betrifft ein Fahrrad, bei dem sich eine Hinterradantriebsscheiben-Drehachse der Hinterradantriebsscheibe maximal 80 mm bezüglich der Fahrtrichtung hinter der Tretlagerwellen-Drehachse liegt. Vorzugsweise befindet sich die Hinterradantriebsscheiben-Drehachse maximal 40 mm, vorzugsweise maximal 15 mm hinter der Tretlagerwellen-Drehachse.

Vorzugsweise befindet sich die Hinterradantriebsscheiben-Drehachse maximal 120 mm bezüglich der Fahrtrichtung vor der Tretlagerwellen-Drehachse. Vorzugsweise befindet sich die Hinterradantriebsscheiben-Drehachse maximal 60 mm bezüglich der Fahrtrichtung vor der Tretlagerwellen-Drehachse, vorzugsweise maximal 5 mm. Dadurch ist im Tretlagerbereich Bauraum verfügbar, beispielsweise für den Hilfsantrieb, insbesondere für den Elektromotor, und/oder für einen Dämpfer, insbesondere einen Stoßdämpfer. Ferner ist dadurch eine kurze Hinterbaulänge realisierbar. Zusätzlich kann am Hinterrad in vorteilhafter Ausgestaltung eine gegenüber dem Stand der Technik verbesserte Raderhebungskurve erreicht werden, die für ein besseres Federungsverhalten sorgt.

Eine Ausführungsform betrifft ein Fahrrad, bei dem die Schaltgetriebe-Ausgangswelle und eine Hinterrad-Antriebsscheibenwelle der Hinterrad-Antriebsscheibe koaxial verlaufen. Die Hinterrad-Antriebsscheibenwelle meint insbesondere eine drehbare Welle, die drehstarr mit der Hinterrad-Antriebsscheibe verbunden ist oder mit dieser oder einstückig ausgebildet ist. Der Vorteil ist, dass Platz eingespart wird. Dies ermöglicht wiederum, dass der Masseschwerpunkt des Fahrrads näher an dem geometrischen Schwerpunkt liegt.

Vorzugsweise entspricht die Hinterrad-Antriebsscheibenwelle der Schaltgetriebe-Ausgangswelle. Der Vorteil ist, dass Gewicht eingespart sowie eine direkte Drehmomentübertragung gewährleistet wird. Alternativ ist es möglich, dass die Hinterrad-Antriebsscheibenwelle an der Schaltgetriebe-Ausgangswelle befestigt ist, vorzugsweise drehstarr, beispielsweise verschraubt. Drehstarr meint, dass die Schaltgetriebe-Ausgangswelle und die Hinterrad-Antriebsscheibenwelle nicht gegeneinander oder unabhängig voneinander rotieren können, sondern dass Drehwinkel und Drehmoment ohne Phasenversatz mindestens in eine Drehrichtung übertragen werden.

Eine Ausführungsform betrifft ein Fahrrad, bei dem sich eine Schaltachse konzentrisch innerhalb der Schaltgetriebe-Eingangswelle befindet. Vorzugsweise ist die Schaltachse mittelbar, insbesondere über ein Gehäuse, drehfest mit dem Rahmen des Fahrrads verbunden. Vorzugsweise ist die Schaltachse mindestens teilweise hohl ausgeführt.

Vorzugsweise ist mindestens ein Sonnenrad eines Planetengetriebes über eine Kupplung drehfest mit der Schaltachse koppelbar. Vorzugsweise ist die Schaltgetriebe-Eingangswelle zu der Schaltgetriebe-Ausgangswelle koaxial angeordnet. Das Gehäuse umgibt vorzugsweise das Schaltgetriebe, beispielsweise zu mindestens 80%, vorzugsweise zu mindestens 90%.

Eine Ausführungsform betrifft ein Fahrrad, bei dem das Pedalgetriebe mindestens zwei parallel geschaltete Getriebestufen aufweist. Vorzugsweise ist während eines Fahrbetriebs des Fahrrads über Kupplungen zu einem Zeitpunkt exakt eine der Getriebestufen aktiviert. Beispielsweise sind die Getriebestufen Riementriebe. Dies hat den Vorteil, dass der Verschleiß gering ist und das Getriebe leise läuft. Zudem ist der Wartungsaufwand gering, da das Getriebe selbstschmierend ist. In vorteilhafter Ausgestaltung kann auf diese Weise die Übersetzungsbandbreite des Schaltgetriebes einfach erhöht werden.

Die Hinterbaulänge des Fahrrads, das heißt der Abstand zwischen der Tretlagerwelle und einer Hinterradnabe des Hinterrads, liegt vorzugsweise zwischen 400 und 550 Millimetern bei Verwendung von Hinterrädern mit einem Radius von 250 bis 375 Millimetern

Somit ist Hinterbaulänge des Fahrrads vorzugsweise maximal das 2-fache des Hinterradradius, vorzugsweise maximal das 1,5-fache des Hinterradradius, weiter vorzugsweise maximal das 1,35-fache. Dies hat den Vorteil, dass der Masseschwerpunkt des Fahrrads näher an dem geometrischen Schwerpunkt liegt und dadurch das Drehträgheitsmoment vergleichsweise gering ist. Die Handlichkeit beim Lenken des Fahrzeugs wird verbessert

Der Hinterrad-Zugmitteltrieb ist vorzugsweise nicht schaltbar. Das reduziert die Komplexität des Fahrrads.

Die Tretlagerwelle ist vorzugsweise nicht koaxial zur Schaltgetriebe-Eingangswelle angeordnet.

Vorzugsweise weist das Schaltgetriebe mindestens eine Schaltkupplung auf. Dadurch ist es möglich, zwischen verschiedenen Gangstufen zu wechseln. Vorzugsweise hat das Schaltgetriebe einen, vorzugsweise elektrisch betriebenen, Schaltgetriebe-Aktuator zum Betätigen der zumindest einen Schaltkupplung. Der Schaltgetriebe-Aktuator steht mittelbar mit einer Betätigungseinrichtung für die Kupplungen in Verbindung, wobei die Betätigungseinrichtung sich in oder an der Schaltachse befindet.

Der Schaltgetriebe-Aktuator ist beispielsweise ein Elektromotor mit hoher Drehzahl, insbesondere mit einer Nenn-Drehzahl von zumindest 10 000 U/min. Die hohe Drehzahl wird vorzugsweise über ein Aktuator-Reduziergetriebe verringert und auf die Schalttrommel übertragen. Die Schalttrommel ist ein Bauteil der Betätigungseinrichtung und ist in der Lage, die Kupplung oder die Kupplungen des Schaltgetriebes zum richtigen Zeitpunkt zu aktivieren oder zu deaktivieren, um die Gangstufen zu schalten. Dadurch kann besonders einfach und bei bestimmten Anwendungen auch automatisiert zwischen den Gangstufen gewechselt werden.

Die Schalttrommel ist beispielsweise eine Welle mit kulissenförmigen Einsenkungen, beispielsweise Einfräsungen, zum Schalten der Schaltkupplungen.

Vorzugsweise weist das Fahrrad mehr als zwei Schaltkupplungen auf, die mit einem Schaltgetriebe-Aktuator versehen sind, der dazu eingerichtet ist, die Betriebszustände der zwischen den Schaltkupplungen zu wechseln. Vorzugsweise weist das Fahrrad mindestens drei, vorzugsweise mindestens sechs, vorzugsweise mindestens acht Gangstufen auf.

Beispielsweise hat das Pedalgetriebe zwei Getriebestufen, die vorzugsweise parallel geschaltet sind, mit unterschiedlichem Übersetzungsverhältnis, wobei über eine Kupplung immer nur eines der Stufen aktiviert ist. Dadurch ist eine Erhöhung der Anzahl der Gangstufen mit wenig zusätzlichem Gewicht und Baukosten möglich.

Vorzugsweise ist die Motorwelle des Hilfsantriebs oberhalb der Tretlagerwelle angeordnet. Vorzugsweise ist die Motorwelle in Fahrtrichtung vor der Tretlagerwelle angeordnet. Vorzugsweise ist die Motorwelle unterhalb eines Mittelpunkts der Hinterrad-Antriebsscheibe angeordnet. Wenn der Hilfsantrieb einen Elektromotor hat, ist die Motorwelle die Elektromotorwelle.

Vorzugsweise ist ein Mittelpunkt der Hinterrad-Antriebsscheibe in Fahrtrichtung maximal 80 mm hinter der Tretlagerwelle, vorzugsweise maximal 40 mm, vorzugsweise maximal 15 mm. Vorzugsweise ist ein Mittelpunkt der Hinterrad-Antriebsscheibe oberhalb der Tretlagerwelle, vorzugsweise mindestens 70 mm oberhalb, vorzugsweise mindestens 80 mm. Vorzugsweise ist ein Mittelpunkt der Hinterrad-Antriebsscheibe vorzugsweise maximal 175 mm oberhalb der Tretlagerwelle, vorzugsweise maximal 120 mm. Dadurch ergibt sich der Vorteil, dass der Hilfsantrieb nahe dem geometrischen Schwerpunkt des Fahrrads angeordnet werden kann und dadurch das Fahrrad einen Masseschwerpunkt nahe dem geometrischen Schwerpunkt hat, sodass das Tragen des Fahrrads und das Fahren von Kurven mit hoher Geschwindigkeit erleichtert wird.

Es ist möglich, dass der Hilfsantrieb bei, vorzugsweise vorübergehendem, Pausieren des Pedalierens, insbesondere bei gleichzeitigem Unterlassen eines Bremsvorgangs weiterhin ein Drehmoment auf das Hinterrad bewirkt.

Beispielsweise ist der Hilfsantrieb dazu eingerichtet, nur bis zu einer vorgegebenen Maximalgeschwindigkeit ein Drehmoment auf das Hinterrad zu übertragen. Die Maximalgeschwindigkeit ist beispielsweise maximal 55 km/h, vorzugsweise maximal 45 km/h. Die Maximalgeschwindigkeit ist vorzugsweise minimal 20 km/h, vorzugsweise minimal 25 km/h.

Vorzugsweise besitzt das Fahrrad einen Sensor, der ausgebildet ist zum Messen eines Pedal-Drehmoments oder / und einer Drehzahl, die der Radfahrer auf die Pedale aufbringt. Weiter vorzugsweise besitzt das Fahrrad einen Sensor, der ausgebildet ist zum Messen eines Drehmoments oder / und einer Drehzahl, die an der Schaltgetriebe-Ausgangswelle anliegt.

Vorzugsweise besitzt das Fahrrad eine Motorsteuerung, die mit den Sensoren zum Erfassen des Drehmoments und/oder der Drehzahl verbunden ist und die zudem mit dem Hilfsantrieb so verbunden ist, dass sie ein Antriebsdrehmoment des Hilfsantriebs in Abhängigkeit vom gemessenen Drehmoment und/oder der Drehzahl steuert. Insbesondere ist die Motorsteuerung so eingerichtet, dass sie das Antriebsdrehmoment - bis zu einem vorgegebenen Maximal-Antriebsdrehmoment - erhöht, wenn das Pedal-Drehmoment steigt. Optional oder zusätzlich ist die Motorsteuerung so eingerichtet, dass sie die Antriebsdrehzahl - bis zu einem vorgegebenen Solldrehzahl - erhöht, wenn eine Drehzahl sensiert wird.

Wenn das Fahrrad in vorteilhafter Ausgestaltung dadurch gekennzeichnet ist, dass die Pedaltrieb-Antriebsscheibe und die Elektromotorwelle mittelbar über ein einzelnes Zugmittel mittelbar mit der Schaltgetriebe-Eingangswelle in drehmomentübertragender Verbindung steht, so können Kosten und Gewicht und Bauraum reduziert werden.

Im Folgenden wird die Erfindung anhand der beigefügten Zeichnungen näher erläutert. Dabei zeigt:
- Figur 1: eine Skizze eines erfindungsgemäßen Fahrrads, das vorteilhaft für hohe Motorleistungen und Speed-Pedelecs ist,
- Figur 2: eine Skizze eines Ausschnitts durch ein erfindungsgemäßes Fahrrad von Fig. 1,
- Figur 3: eine schematische Skizze der Antriebskomponenten als Ausschnitt eines erfindungsgemäßen Fahrrads wie in Fig. 1,
- Figur 4: eine Skizze eines erfindungsgemäßen Fahrrads gemäß einer zweiten Ausführungsform,
- Figur 5: eine Schnittskizze entlang des Schnitts A - B durch das Reduziergetriebe des Elektromotors aus Figur 4, und
- Figur 6: eine Schnittskizze entlang des Schnitts C - D durch das Schaltgetriebe des Fahrrads aus Figur 4 und
- Figur 7: eine schematische Skizze der Antriebskomponenten einer weiteren Ausführungsform des erfindungsgemäßen Fahrrads.

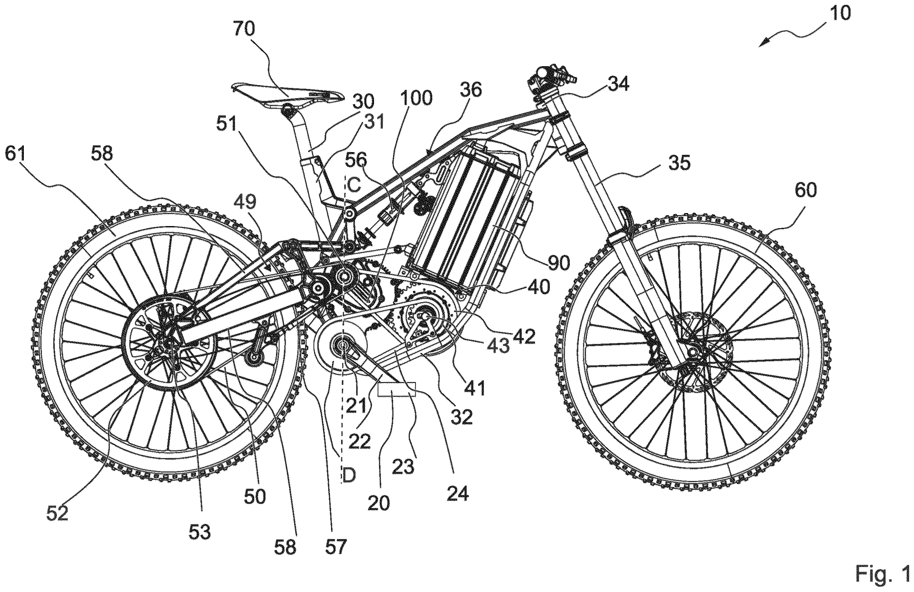

**Figur 1** zeigt eine maßstabsgerechte Ansicht eines erfindungsgemäßen Fahrrads 10 mit einem Hilfsantrieb 100. Das Fahrrad 10 hat einen Pedalantrieb 20 mit einer Tretlagerwelle 21, um die sich an jedem Ende der Tretlagerwelle 21 eine Tretkurbel 22 rotieren lässt. An jeder Tretkurbel 22 befindet sich ein Pedal 23. Ferner hat das Fahrrad 10 einen Hilfsantrieb 100. Zudem hat das Fahrrad 10 einen Rahmen 36 mit einer Sattelstrebe 30, einem Sattelrohr 31, einem Unterrohr 32, einem Steuerrohr 34 und einem mit dem Steuerrohr 34 verbundenen Gabel 35. An der Gabel 35 ist ein Vorderrad 60 angeordnet.

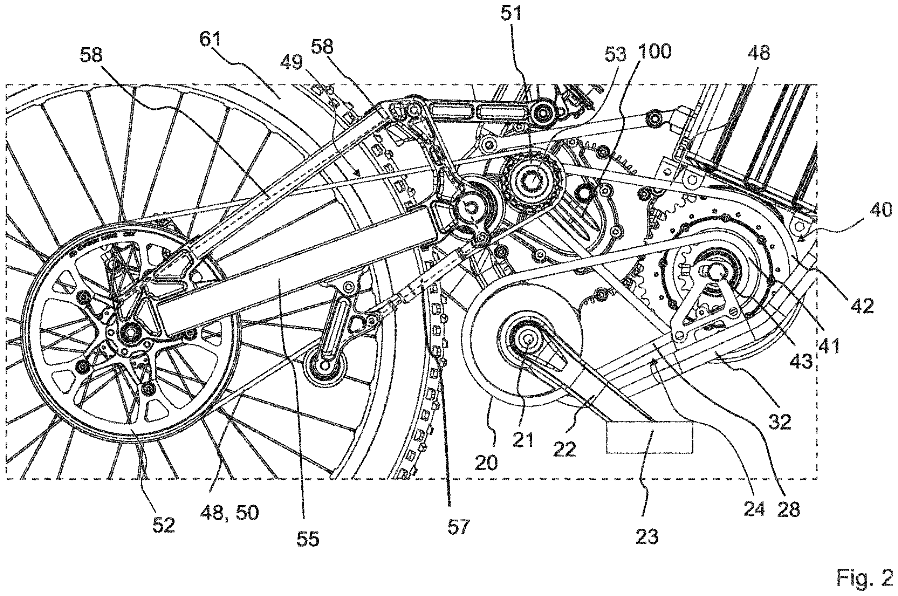

Wenn die Tretkurbel 22 rotiert, wird in die Tretlagerwelle 21 ein Drehmoment eingeleitet, das von dort auf eine Schaltgetriebe-Eingangswelle 41 eines Schaltgetriebes 40, von dort auf eine Schaltgetriebe-Ausgangswelle 42 und von dort wiederum auf eine Hinterrad-Antriebsscheibe 51 eines Hinterrad-Zugmitteltriebs 49 übertragen wird. Über ein Zugmittel 50 (siehe Figur 2) wird das Drehmoment der Hinterrad-Antriebsscheibe 51 auf eine Hinterrad-Abtriebsscheibe 52 an einer Hinterradnabe eines Hinterrads 61 übertragen. Die Hinterrad-Abtriebsscheibe 52 ist drehstarr mit dem Hinterrad 61 verbunden. Die Hinterrad-Antriebsscheibe 51, Hinterrad-Abtriebsscheibe 52 und das Zugmittel 50 bilden zusammen den Hinterrad-Zugmitteltrieb 49. Das Hinterradtrieb-Übersetzungsverhältnis V des Hinterrad-Zugmitteltriebs 49 ist betragsmäßig größer als eins. Im vorliegenden Fall gilt V = 60/20 = 3

Die Tretlagerwelle 21 ist mit dem Schaltgetriebe 40 über ein Pedalgetriebe 24 verbunden. Das Pedalgetriebe 24 überträgt das Drehmoment von der Tretlagerwelle 21 auf die Schaltgetriebe-Eingangswelle 41. Das Pedalgetriebe 24 ist beispielsweise ein Zahnradgetriebe oder ein Zugmittelgetriebe, beispielsweise ein Zahnriementrieb. Das Übersetzungsverhältnis U des Pedalgetriebes 20 ist vorzugsweise betragsmäßig kleiner eins. Im vorliegenden Fall gilt U = 20/34 = 0,59.

Die Schaltgetriebe-Ausgangswelle 42 befindet sich vor und oberhalb der Tretlagerwelle 21 und koaxial zur Schaltgetriebe-Eingangswelle 41. Das Schaltgetriebe 40 hat beispielsweise ein schaltbares Teilgetriebe, hier ein Planetengetriebe.

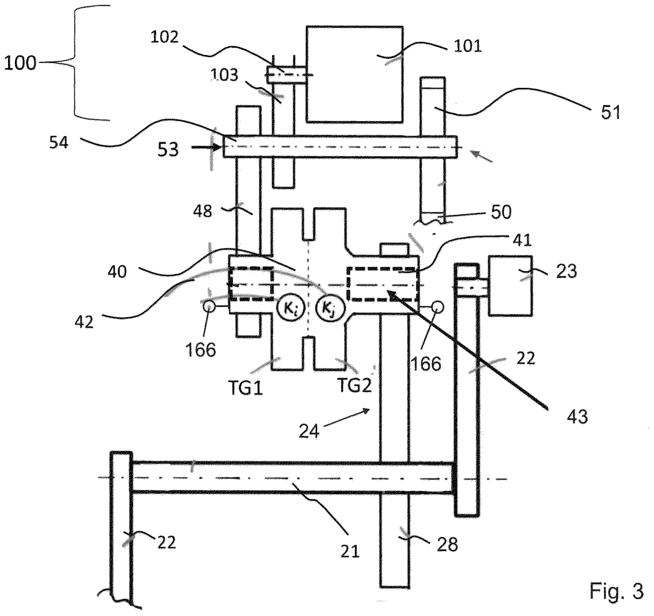

Das Schaltgetriebe 40 hat zwei schaltbare Teilgetriebe, beide als schaltbare Planetengetriebe ausgestaltet, die in Reihe geschaltet sind (siehe TG1 und TG2 in Figur 3). Figur 1 zeigt in dieser beispielhaften Ausgestaltung, dass die Schaltgetriebe-Eingangswelle 41 in Fahrtrichtung des Fahrrads 10 rund 200 Millimeter vor der Tretlagerwelle 21 liegt. In anderen, hier nicht dargestellten Ausführungen kann die Schaltgetriebe-Eingangswelle 41 in Fahrtrichtung insbesondere zwischen 60 und 250 Millimeter in Fahrtrichtung vor der Tretlagerwelle 21 angeordnet sein.

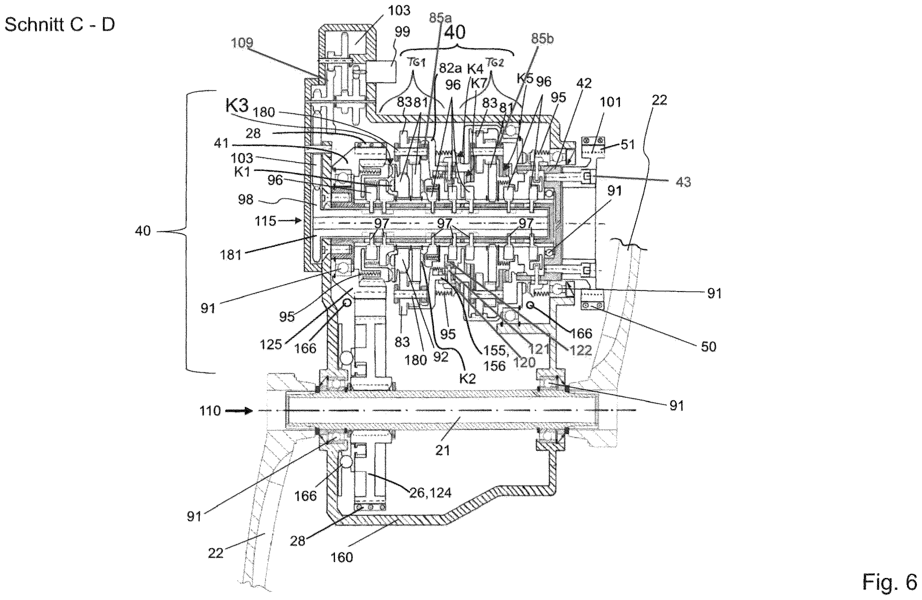

Die Schaltgetriebeeingangswellen-Drehachse der Schaltgetriebe-Eingangswelle 41 befindet sich in Fahrtrichtung des Fahrrads 10 vor der Hinterradantriebsscheiben-Drehachse der Hinterradantriebsscheibe 51. Die Schaltgetriebe-Ausgangswelle 42 ist koaxial zu der Schaltgetriebe-Eingangswelle 41 und liegt hier nicht sichtbar hinter dieser (vgl. auch Figur 6).

Der Hilfsantrieb 100 hat einen Elektromotor 101, der eine Elektromotorwelle 102 antreibt (in Fig. 3 gezeigt). Beispielsweise wird das Drehmoment der Elektromotorwelle 102 über ein Reduziergetriebe 103 (in Figur 3 gezeigt) auf die Hinterrad-Antriebsscheibe 51 übertragen.

Beispielsweise wirkt der Hilfsantrieb 100 direkt auf die Schaltgetriebe-Ausgangswelle 42 oder im Drehmomentfluss dahinter, beispielsweise auf die Hinterrad-Antriebsscheibe 51. Insbesondere wirkt der Hilfsantrieb 100 in diesem Beispiel nicht auf die Schaltgetriebe-Eingangswelle 41.

Beispielsweise verlaufen die Schaltgetriebe-Ausgangswelle 42 und eine Hinterrad-Antriebsscheibenwelle der Hinterrad-Antriebsscheibe 51 koaxial (siehe Figur 6). Beispielsweise entspricht die Hinterrad-Antriebsscheibenwelle der Schaltgetriebe-Ausgangswelle 42.

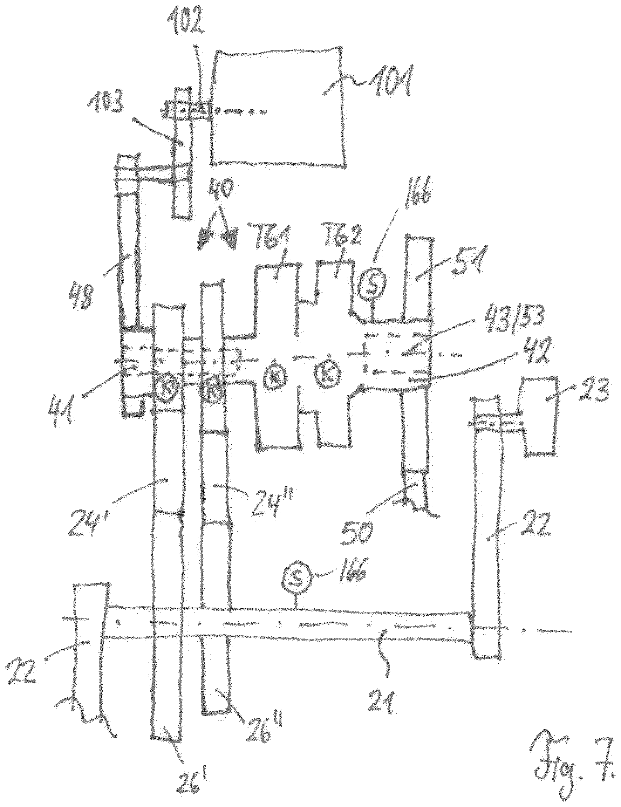

In einer weiter verbesserten Ausführung, wie in Figur 7 schematisch dargestellt, hat das Pedalgetriebe 24 hat zwei parallel geschaltete Getriebestufen 24' und 24", wobei während eines Fahrbetriebs über Kupplungen K' und K" zu einem Zeitpunkt für bestimmte Gangstufen exakt eine der Getriebestufen aktiviert ist.

Das Fahrrad 10 weist zudem eine Federung 55 zur Federung des Hinterrads 61 auf. Das Fahrrad 10 hat einen Feder-Dämpfer 56 zur Stoßdämpfung einer Schwinge 58. Das Zugmittel 50 wird mittels eines Spanners 57 gespannt.

Das Hinterrad 61 ist an der Schwinge 58 befestigt. Die Hinterradantriebsscheiben-Drehachse der Hinterrad-Antriebsscheibe 41 ist nicht koaxial zu einem Schwingen-Momentandrehpunkt der Schwinge 58.

An dem Fahrrad 10 ist ferner ein Akkumulator 90 als Energiespeicher für den Hilfsantrieb 100 angeordnet. Das Fahrrad weist ferner einen Sattel 70 an dem Sattelrohr 31 auf.

Das in Figur 1 gezeigte Fahrrad 10 ist vorteilhaft für Elektromotoren mit einer Leistung von maximal 4 kW und somit auch für Speed-Pedelecs und L1e-B-Typ-Fahrräder.

**Figur 2** zeigt eine Detailansicht des Fahrrads 10 aus Figur 1. Das Schaltgetriebe 40 hat zwei Teilgetriebe TG1, TG2 (siehe Figur 3), die hier schaltbare Planetengetriebe sind. Das zweite Teilgetriebe TG2 liegt in Figur 2 hinter dem ersten Teilgetriebe TG1. Ein Querschnitt durch die Teilgetriebe TG1, TG2 ist schematisch in Figur 3 gezeigt.

**Figur 3** zeigt ein Schema des Drehmomentflusses des Fahrrads 10 aus Figur 1 und Figur 2 und keinen Schnitt. Gezeigt ist die Drehmomentübertragung vom Elektromotor 101 des Hilfsantriebs 100 auf die Hinterrad-Antriebsscheibe 51 sowie von der rotierenden Tretkurbel 22 auf die Tretlagerwelle 21, von dort über ein Zugmittel 28 auf die Schaltgetriebe-Eingangswelle 41 des Schaltgetriebes 40. Vom Schaltgetriebes 40 wird das Drehmoment über ein Zugmittel 48 auf eine Hinterradantriebsscheibenwelle 54 und von dort auf die Hinterrad-Antriebsscheibe 51 geleitet. Die Hinterrad-Antriebsscheibe 51 gibt das Drehmoment über das Zugmittel 50 (siehe Figur 1) an die Hinterrad-Abtriebsscheibe 52 weiter. Andere Antriebsstränge sind möglich.

Eine Hinterradantriebsscheiben-Drehachse 53 der Hinterrad-Antriebsscheibe 51 ist hier nicht koaxial zu einer Schaltgetriebeeingangswellen-Drehachse 43 der Schaltgetriebe-Eingangswelle 41, die wiederum koaxial zu der Schaltgetriebeausgangswellen-Drehachse der Schaltgetriebe-Ausgangswelle 42 ist. Das Schaltgetriebe 40 hat ein erstes Teilgetriebe TG1 mit Kupplungen Ki und ein zweites Teilgetriebe TG2 mit Kupplungen Kj. Beispielsweise sind im ersten Teilgetriebe TG1 drei Kupplungen K1-K3. Im zweiten Teilgetriebe TG2 sind beispielsweise vier weitere Kupplungen K4-K7.

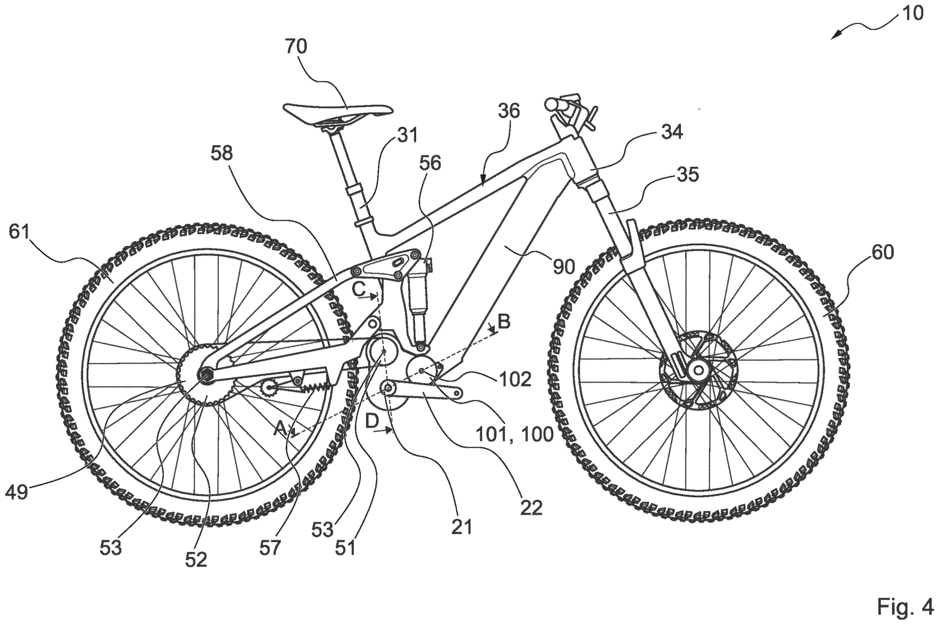

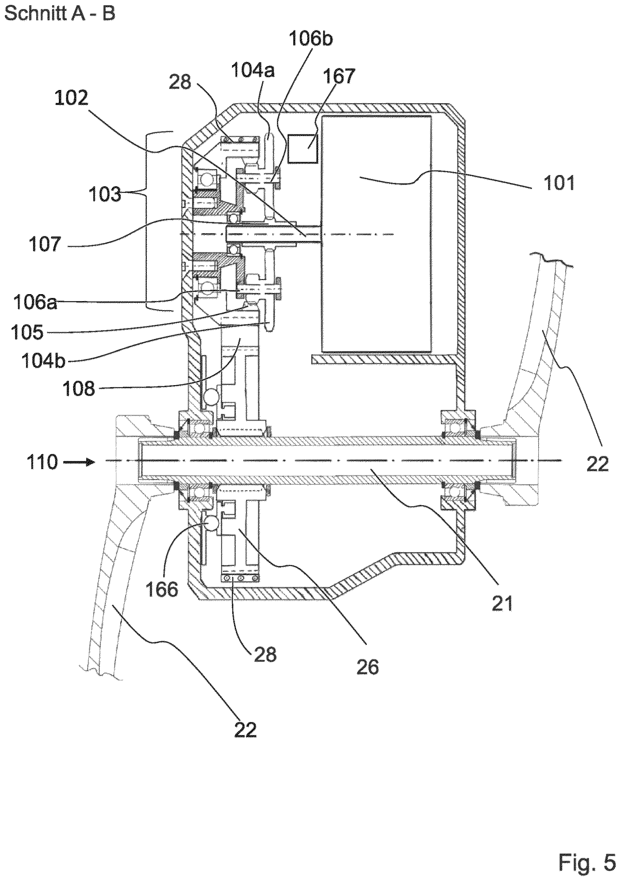

**Figur 4** zeigt ein erfindungsgemäßes Fahrrad 10 gemäß einer zweiten Ausführungsform. Im Unterschied zu Figur 1 bis 3 ist der Elektromotor 101 mit der Elektromotorwelle 102 so angeordnet, dass das Drehmoment von der Elektromotorwelle 102 nicht auf die Hinterrad-Antriebsscheibe 51, sondern zusammen mit den Drehmomenten der Tretlagerwelle auf die Schaltgetriebe-Eingangswelle 41 (siehe Figur 5 und 6) übertragen wird. Die Elektromotorwelle 102 liegt nicht koaxial zu der Schaltgetriebe-Eingangswelle 41 und der Schaltgetriebe-Ausgangswelle 42. Diese beispielhafte Ausführung eines Fahrrades 10 ist dadurch gekennzeichnet, dass die in Figur 5 und 6 dargestellte Pedaltrieb-Antriebsscheibe 26 und die Elektromotorwelle 102 mittelbar über ein, insbesondere ein einziges Zugmittel 28 mittelbar mit der Schaltgetriebe-Eingangswelle 41 in drehmomentübertragender Verbindung steht.

Weiterhin ist die beispielhafte Ausführung eines Fahrrades 10 dadurch gekennzeichnet, dass die Schaltgetriebe-Eingangswelle 41 und die Schaltgetriebe-Ausgangswelle 42 und die Hinterrad-Antriebsscheibe 51 koaxial zueinander angeordnet. Ebenfalls erkennt man in dieser Figur 4, dass das Fahrrad dadurch gekennzeichnet ist, dass die Hinterradantriebscheibendrehachse 53 von der Tretlagerwelle 21 um einen Achsversatz beabstandet ist und die Hinterradantriebscheibendrehachse 53 sich oberhalb der Tretlagerwelle 21 befindet, wobei der Achsversatz minimal 70 mm und maximal 175 mm beträgt. Hier in dieser besonders vorteilhaften Ausgestaltung gemäß Figur 4 beträgt der Achsversatz 110 Millimeter.

Dieser Aufbau ist vorteilhaft für Fahrräder mit einem Elektromotor 101 mit einer maximalen Nenn-Dauerleistung von 1 kW oder weniger. Bei höheren Motorleistungen ist eine Übertragung des Motor-Drehmoments auf das Schaltgetriebe nachteilig, da das Schaltgetriebe sonst verstärkt konstruiert werden müsste, was mehr Gewicht, Kosten und Verschleiß zur Folge haben würde.

**Figur 5** ist ein Querschnitt gemäß dem Schnitt A - B aus Figur 4. Die Tretkurbeln 22 übertragen beim Pedalieren ein Drehmoment auf die Tretlagerwelle 21, die um eine Tretlagerwellen-Drehachse 110 rotiert. Der Hilfsantrieb 100 hat den Elektromotor 101 und das Reduziergetriebe 103. Der Elektromotor 101 versetzt die Elektromotorwelle 102 in Rotation, deren Drehfrequenz über das Reduziergetriebe 103 reduziert wird. Das Reduziergetriebe 103 hat eine Reduziergetriebe-Eingangswelle, die von der Elektromotorwelle 102 angetrieben wird.

Das Reduziergetriebe 103 hat zudem eine Reduziergetriebe-Ausgangswelle, die über den Riemen 108 beispielsweise direkt auf die Schaltgetriebe-Eingangswelle 41 wirkt. Das Reduziergetriebe 103 ist hier ein Planetengetriebe mit einem Sonnenrad 107, zumindest zwei Planetenrädern 104a, und einem Hohlrad 105. Die Planetenräder 104a, b, rotieren um Planetenradachsen 106a, b. Andere Getriebearten sind alternativ möglich.

Die durch das Reduziergetriebe 103 reduzierte Drehzahl wird die Leistung des Elektromotors 101 über einen Riemen 108 zusammen mit der mechanischen Leistung der Pedaltrieb-Antriebsscheibe 26 auf die Schaltgetriebe-Eingangswelle 41, die in Figur 6 dargestellt ist, übertragen. Im Riemen 108 werden die Antriebsleistungen des Hilfsantriebs 100 und des Pedalantriebs 20 zusammengeführt.

Eine Motorsteuerung 167 steuert den Hilfsantrieb 100, wobei hierzu die Signale, die von Sensoren 166 zur Verfügung gestellt werden, verarbeitet werden. Sensoren 166, 166', 166" können vorzugsweise im Lastpfad vor und / oder hinter dem Schaltgetriebe 40 angeordnet sein.

**Figur 6** einen Querschnitt entlang des Schnitts C - D gemäß Figur 4. Die Tretkurbeln 22 übertragen beim Pedalieren ein Drehmoment auf die Tretlagerwelle 21, die um die Tretlagerwellen-Drehachse 110 rotiert. Auf der Tretlagerwelle 21 befindet sich eine erste Riemenscheibe 124, die als Pedaltrieb-Antriebscheibe 26 arbeitet und über einen Riemen 28 das Drehmoment auf eine zweite Riemenscheibe 125 überträgt, die das Drehmoment auf die Schaltgetriebe-Eingangswelle 41 überträgt. In dieser Figur sind diese Bauteile aus einem Stück gebildet. Dadurch findet eine erste Übersetzung ins Schnelle statt.

Der Riemen 28 ist beispielsweise ein Zahnriemen. Alternative wird das Drehmoment von der Tretlagerwelle 21 per Zahnrädern auf die Schaltgetriebe-Eingangswelle 41 übertragen. Das Drehmoment, die Drehzahl und/oder der Drehwinkel wird mittels eines Sensors 166 gemessen. Anhand der Werte des Sensors 166 steuert die Motorsteuerung 167 (siehe Figur 5) den Hilfsantrieb 100. Es können sich ebenfalls mehrere Sensoren im Lastpfad vor und hinter dem Schaltgetriebe befinden. Die Sensoren können in vorteilhafter Ausgestaltung physikalische Größen wie Drehwinkel, Drehgeschwindigkeit oder auch das Drehmoment messen.

Figur 5 und Figur 6 zeigen, dass die Pedaltrieb-Antriebsscheibe 26 und die Elektromotorwelle 102 mittelbar über insbesondere einen einzigen Riemen 28 mittelbar mit der Schaltgetriebe-Eingangswelle 41 in drehmomentübertragender Verbindung steht.

Es werden in dieser vorteilhaften Ausgestaltung die Leistungen des Elektromotors 101 und die Leistungen des Pedalantriebs 20 im Riemen 28 zusammengeführt und auf die zweite Riemenscheibe 125, die mit der Schaltgetriebe-Eingangswelle 41 hier einstückig ausgeführt ist, zusammen eingeleitet und von dort über das Schaltgetriebe 40 auf das Hinterrad-Antriebsrad 51 weitergegeben.

Das Schaltgetriebe 40 ist in einem Gehäuse 160 angeordnet, das das Schaltgetriebe 40 vor Verschmutzung und Wettereinflüssen schützt.

Eine Schaltachse 115 ist koaxial zu den beiden Teilgetrieben TG1, TG2 angeordnet. Die Schaltachse 115 steht fest, das heißt sie rotiert nicht. Die Schaltachse 115 ist konzentrisch innerhalb der Schaltgetriebe-Eingangswelle 41 angeordnet.

Die Schaltachse 115 ist mittelbar über das Gehäuse 160 des Schaltgetriebes (40) drehfest mit dem Rahmen 36 des Fahrrads 10 verbunden. Die Schaltachse 115 ist beispielsweise mindestens teilweise hohl.

Eine Betätigungseinrichtung 181, die mit dem Schaltgetriebe-Aktuator 99 in Verbindung steht, befindet sich teilweise innerhalb der Schaltachse 115 und ist dazu eingerichtet, mindestens eine der Kupplungen K1-K7 des Schaltgetriebes 40 zu betätigen.

Mindestens ein Sonnenrad 81 eines der beiden Teilgetriebe TG1, TG2, die Planetengetriebe sind, ist über eine der Kupplungen K1-K7 drehfest mit der Schaltachse 115 verbindbar.

Das Schaltgetriebe 40 umfasst das erste Teilgetriebe TG1 und das zweite Teilgetriebe TG2. Die Schaltgetriebe-Eingangswelle 41, die Schaltgetriebe-Ausgangswelle 42 sind jeweils über Kugellager 91 im Gehäuse 160 und auf der Schaltachse 115 gelagert.

Das erste Teilgetriebe TG1 hat zwei Sonnenräder 81a, b und ein Hohlrad 82a, an dem mindestens zwei Planetenräder 83a, b rotieren. Beispielsweise ist das Teilgetriebe wie in der DE 10 2018 007 326 A beschrieben aufgebaut.

Die Planetenräder 83a, b rotieren um jeweils um eine der Planetenradachsen 180 und sind auf dem Steg 84 gelagert. Die Planetenradachsen 180 sind in den Steg 84 eingepresst. Das Hohlrad 82 und der Steg 84 rotieren um die Schaltachse 115.

Das zweite Teilgetriebe TG2 hat ein Sonnenrad 81c, ein Hohlrad 82b und mindestens zwei Planetenräder 83c.

Für die Schaltung der Planetengetriebe TG1, TG2 werden die Sonnenräder 81a, b, c drehfest mit der Schaltachse 115 gekoppelt. Eine Schalttrommel 98 ist drehbar und hat auf der Mantelfläche innen Konturen, beispielsweise gefräst, beispielsweise wie eine Kulisse, verantwortlich für das Einkuppeln und Auskuppeln der Kupplungen K1 bis K7, um hierdurch die verschiedenen Gangstufen zu realisieren. Durch die zwei Teilgetriebe TG1, TG2 mit je drei Übersetzungen Planetenrädern 83 ergeben sich neun Gangstufen.

In der erste Gangstufe ist das linke Sonnenrad 81 des ersten Teilgetriebes TG1 über die erste Kupplung K1 mit dem Gehäuse 160 über die Schaltachse 115 verbunden. In der zweiten Gangstufe ist das rechte Sonnenrad 81 des ersten Teilgetriebes TG1 über die zweite Kupplung K2 mit dem Gehäuse 160 über die Schaltachse 115 verbunden. In der dritten Gangstufe, beispielsweise mit einer Übersetzung von eins zu eins als Direktgang, ist die Schaltgetriebeeingangswelle 41 über die Kupplung K3 direkt mit dem linken Sonnenrad 81 des ersten Teilgetriebes TG1 verbunden.

Die Kupplungen K1 bis K7 sind beispielsweise durch lineare axiale Bewegung schaltbare Klauenkupplungen mit Freilauffunktion. Die Kupplungen bewegen sich axial und parallel zur Schaltachse 115. Wenn die Kupplungen Klauenkupplungen sind, befinden sie sich, über Federn vorgespannt, in geschlossenem Zustand, außer wenn sie mittelbar durch angrenzende Schieberinge 96 oder Schaltfinger 97 offengehalten werden. Beispielsweise sind die Kupplungen K1 bis K7 schaltbare Axialkupplungen mit je einem axial verschiebbaren und einem axial festgesetzten Bauteil.

Vorzugsweise sind die axialen Kupplungen stirnseitig planverzahnt. Dadurch wird gegenüber einer radialen Kupplung mit Schaltklinken eine wesentlich größere kraftübertragende Fläche bei gleichem Bauraum ermöglicht. So wird in vorteilhafter Weise die Flächenpressung verringert.

Die Steuerung der axialen Kupplungen erfolgt über den Schaltgetriebe-Aktuator 99 durch Rotation der Schalttrommel 98. Die Schalttrommel 98 ist zylindrisch mit Nuten und/oder Erhebungen und Vertiefungen ausgestaltet. Die Schalttrommel 98 ist in der Schaltachse 115 drehbar gelagert angeordnet. Durch Ändern der Winkelposition der Schalttrommel 98 in Relation zur Schaltachse 115 sind die Kupplungen K1 bis K7 über Schaltfinger 97 und Schieberinge 96 zu öffnen oder zu schließen. Die Winkelposition der Schalttrommel 98 und damit die Gangstufen ist einstellbar, beispielsweise wie hier dargestellt elektrisch über einen Schaltgetriebe-Aktuator 99 und einen Schalter am Lenker des Fahrrads 10. Alternativ ist eine Einstellung der Winkelposition der Schalttrommel 98 und damit der Gangstufen mechanisch durch beispielsweise Bowdenzüge realisierbar.

Der Schaltgetriebe-Aktuator 99 ist über ein Reduziergetriebe 109 mittelbar über Zahnräder mit der Schalttrommel 98 verbunden. Der Schaltgetriebe-Aktuator 99 zum Schalten wird vorzugsweise mit hoher Drehzahl betrieben. Die Schalttrommel 98 ist somit ein Teil der Betätigungseinrichtung 181.

Bei der ersten Kupplung K1 werden im eingekuppelten Zustand die beiden Hälften der stirnseitigen Planverzahnung mit Hilfe von Federn 95 zusammengehalten. Zum Trennen der ersten Kupplung K1 wird eine axial verschiebliche Kupplungshälfte 92 mit Hilfe eines Schieberings 96, der mit der Schalttrommel 98 über Schaltfinger 97, die zylinderförmig sind, in Verbindung steht, axial gegen die Wirkung der Feder 95 so bewegt, dass sich die Verzahnung aus dem Eingriff heraus bewegt und die erste Kupplung K1 geöffnet wird.

Alle anderen Kupplungen K2 bis K7 funktionieren ebenfalls gemäß diesen Ausführungen. Alternativ sind auch andere Kupplungsarten für das Fahrrad 10 verwendbar.

Das erste Teilgetriebe TG1 hat zwei Sonnenräder 81a, b, von denen eines beispielsweise 46 Zähne hat und das andere 63 Zähne. Jedes der beiden Sonnenräder 81a, b des ersten Teilgetriebes TG1 ist verbunden mit mindestens zwei Planetenrädern 83a, b, die als Stufenplaneten einstückig aufgebaut sind von denen das erste Planetenrad 83a beispielsweise 27 und das zweite Planetenrad 83b beispielsweise 44 Zähne hat.

Das erste Teilgetriebe TG1 hat ein Hohlrad 82a, welches beispielsweise 117 Zähne hat und mit dem kleineren Durchmesser des Stufenplanetenrades 83a, das 27 Zähne hat, in kämmender Verbindung steht. Das erste Teilgetriebe weist Kupplungen K1 bis K3 auf.

Die Ausgangswelle 155 des ersten Teilgetriebes TG1 ist hier einstückig mit der Eingangswelle 156 des zweiten Teilgetriebes TG2 ausgebildet. Das zweite Teilgetriebe TG2 weist Kupplungen K4 bis K7 auf. Das zweite Teilgetriebe T2 hat ein Sonnenrad 81c, mindestens zwei Planetenräder 83c, die als Stufenplanet ausgeführt sind, und ein Hohlrad 82b mit beispielsweise 113 Zähnen.

Die Ausgangswelle des zweiten Teilgetriebes TG2 ist zugleich die Schaltgetriebe-Ausgangswelle 42, ragt aus dem Gehäuse 160 hinaus und ist über Kugellager 91 im Gehäuse 160 gelagert. Die Schaltgetriebe-Ausgangswelle 42 ist mit dem Hinterrad-Antriebsscheibe 51 verbunden, vorzugsweise drehstarr, das heißt, dass beide nicht gegeneinander rotieren können, sondern Drehwinkel und Drehzahl ohne Phasenversatz übertragen werden. Beispielsweise sind beide miteinander verschraubt. Die Hinterrad-Antriebsscheibe 51 überträgt über das Zugmittel 50 des Hinterrad-Zugmitteltriebs das Drehmoment auf die Hinterrad-Abtriebsscheibe 52 (hier nicht gezeigt).

Die Kupplung K4 hat eine bewegliche Kupplungshälfte 120, die über einen Laufring 122 und über einen Schaltstift 121 mithilfe des Schieberings 96 angesteuert werden kann. Die Kupplung K5 ist spiegelbildlich zur Kupplung K4 aufgebaut. Die Kupplung K7 ist spiegelbildlich zur Kupplung K6 aufgebaut. Die Kupplung K7 besitzt eine bewegliche Hälfte 120, die mit der Eingangswelle des zweiten Teilgetriebes TG2 in Verbindung steht. Die Kupplung K7 verbindet somit die Eingangswelle des zweiten Teilgetriebes TG2 mit dem Steg 85b des zweiten Teilgetriebes TG2.

Wenn die Kupplungen K4 und K5 geschlossen sind, ist die Übersetzung eins zu eins und das Drehmoment wird über das Hohlrad 82b in die Schaltgetriebe-Ausgangswelle 42 weitergeleitet.

Wenn die Kupplung K7 geschlossen ist und die Kupplung K5 geschlossen ist und parallel dazu die Kupplungen K4 und K6 geöffnet sind, so wirkt das zweite

Teilgetriebe TG2 mit einer Übersetzung ins Schnelle. Wenn hingegen die Kupplung K7 geöffnet ist und die Kupplung K4 geschlossen, parallel hierzu die Kupplung K5 geöffnet und die Kupplung K6 geschlossen, wirkt das zweite Teilgetriebe TG2 mit einer Übersetzung ins Langsame.

Aufgrund der langen Bauform der Schaltachse 115 ist es in diesem Ausführungsbeispiel sinnvoll, die Schaltachse 115 über ein Kugellager 91 innerhalb der Ausgangswelle 107 des zweiten Teilgetriebes TG2 zu lagern.

Figur 7 zeigt eine schematische Skizze der Antriebskomponenten einer weiteren Ausführungsform des erfindungsgemäßen Fahrrads 10. Von den Pedale 23 wird ein Drehmoment über die Tretkurbel 22 auf die Tretlagerwelle 21 übertragen. Von dort wird das Drehmoment über die Pedaltrieb-Antriebsscheibe 26` der Stufe 1 auf das Pedalgetriebe 24' der Stufe 1 sowie über die Pedaltrieb-Antriebsscheibe Stufe 2 26" auf das Pedalgetriebe Stufe 2 24" übertragen.

Zusätzlich zu dem Drehmoment über den Pedalantrieb wird auf die Schaltgetriebe-Eingangswelle ein weiteres Drehmoment übertragen, das von dem Elektromotor 101 erzeugt wird und über die Elektromotorwelle 102, das Reduziergetriebe des Elektromors 103 und das Zugmittel 48 auf die Schaltgetriebeeingangswelle 41 übertragen wird. Das Drehmoment wird über das Schaltgetriebe 40 mit dem ersten und zweiten Teilgetriebe TG1, TG2 auf die Schaltgetriebe-Ausgangswelle 42 und von dort auf das Zugmittel des Hinterrad-Zugmitteltriebs 50 übertragen.

Zwei Sensoren 166 sind dazu eingerichtet, Daten der Tretlagerwelle 21 bzw. des Schaltgetriebes 40 zu erfassen. Beispielsweise wird anhand der erfassten Daten die Leistung des Elektromotors 101 angepasst.

In der folgenden Tabelle ist ein Beispiel für ein Fahrrad mit drei möglichen Gangstufen des ersten Teilgetriebes TG1 und die drei möglichen Gangstufen des zweiten Teilgetriebes TG2 dargestellt. Als Multiplikation der jeweiligen Übersetzungen ergeben sich die neun Gänge mit einer Übersetzungsbandbreite von 554% und vorteilhaft gleichmäßigen Gangsprüngen von 23,4-24,1%.

| | | Teilgetriebe 1 | Teilgetriebe 2 | Gesamtübersetzung: | Sprung (%) |
|---|---|---|---|---|---|
| Gang | 1 | 1,0000 | 0,5268 | 0,5268 | |
| Gang | 2 | 1,2412 | 0,5268 | 0,6538 | 24,12 |
| Gang | 3 | 1,5385 | 0,5268, | 0,8104 | 23,95 |
| Gang | 4 | 1,0000 | 1,0000 | 1,0000 | 23,39 |
| Gang | 5 | 1,2412 | 1,0000 | 1,2412 | 24,12 |
| Gang | 6 | 1,5385 | 1,0000 | 1,5385 | 23,95 |
| Gang | 7 | 1,0000 | 1,8983 | 1,8983 | 23,39 |
| Gang | 8 | 1,2412 | 1,8983 | 2,3562 | 24,12 |
| Gang | 9 | 1,5385 | 1,8983 | 2,9206 | 23,95 |

**Bezugszeichenliste**

| | | | |
|---|---|---|---|
| 10 | Fahrrad | 36 | Rahmen |
| 20 | Pedalantrieb | 40 | Schaltgetriebe |
| 21 | Tretlagerwelle | 41 | Schaltgetriebe-Eingangswelle |
| 22 | Tretkurbel | 42 | Schaltgetriebe-Ausgangswelle |
| 23 | Pedal | 43 | Schaltgetriebeeingangswellen-Drehachse |
| 24 | Pedalgetriebe | | |
| 24' | Pedalgetriebe Stufe 1 | 48 | Zugmittel |
| 24" | Pedalgetriebe Stufe 2 | 49 | Hinterrad-Zugmitteltrieb |
| 26 | Pedaltrieb-Antriebsscheibe | 50 | Zugmittel des Hinterrad-Zugmitteltriebs |
| 26` | Pedaltrieb-Antriebsscheibe Stufe 1 | 51 | Hinterrad-Antriebsscheibe |
| 26" | Pedaltrieb-Antriebsscheibe Stufe 2 | 52 | Hinterrad-Abtriebsscheibe |
| | | 53 | Hinterradantriebsscheiben-Drehachse |
| 28 | Zugmittel | 54 | Hinterrad-Antriebsscheibenwelle |
| 31 | Sattelrohr | 55 | Federung |
| 32 | Unterrohr | 56 | Dämpfer |
| 34 | Steuerrohr | 57 | Spanner |
| 35 | Gabel | 58 | Schwinge |
| 60 | Vorderrad | 121 | Schaltstift |
| 61 | Hinterrad | 122 | Laufring |
| 70 | Sattel | 123 | Riemen |
| 81a,b | Sonnenrad (von TG1, 2) | 124 | erste Riemenscheibe |
| 82a | Hohlrad (von TG1, 2) | 125 | zweite Riemenscheibe |
| 83a,b,c | Planetenrad (von TG1, 2) | 155 | Ausgangswelle von TG1 |
| 85a,b | Steg (von TG1, 2) | 156 | Eingangswelle von TG2 |
| 90 | Akkumulator | 160 | Gehäuse |
| 91 | Kugellager | 166 | Sensor |
| 92 | axial bewegliche | 166' | Sensor |
| | Kupplungshälfte | 166" | Sensor |
| 95 | Feder | 167 | Motorsteuerung |
| 96 | Schiebering | 180 | Planetenradachse des |
| 97 | Schaltfinger | | Schaltgetriebes |
| 98 | Schalttrommel | 181 | Betätigungsvorrichtung |
| 99 | Schaltgetriebe-Aktuator | | |
| 100 | Hilfsantrieb | K | Kupplung |
| 101 | Elektromotor | S | Sensor |
| 102 | Elektromotorwelle | TG1 | erstes Teilgetriebe |
| 103 | Reduziergetriebe des Elektromotors | TG2 | zweites Teilgetriebe |
| | | U | Übersetzungsverhältnis |
| 104a,b | Planetenräder des Elektromotor-Reduziergetriebes | V | Übersetzungsverhältnis |
| 105 | Hohlrad des Elektromotor-Reduziergetriebes | | |
| 106a,b | Planetenradachsen des Elektromotor-Reduziergetriebes | | |
| 107 | Sonnenrad des Elektromotor-Reduziergetriebes | | |
| 108 | Riemen zum Elektromotor-Reduziergetriebe | | |
| 109 | Aktuator-Reduziergetriebe | | |
| 110 | Tretlagerwellen-Drehachse | | |
| 115 | Schaltachse | | |
| 120 | bewegliche Hälfte der Kupplung | | |

## Patentansprüche

1. Fahrrad (10), mit
(a) einer Hinterrad-Antriebsscheibe (51), die eine Hinterradantriebsscheiben-Drehachse (53) hat, zum Antreiben eines Hinterrads,
(b) einem Pedalantrieb (20), der eine Tretlagerwelle (21) hat,
(c) wobei die Hinterradantriebscheibendrehachse (53) von der Tretlagerwelle (21) um einen Achsversatz beabstandet ist,
(d) wobei die Hinterradantriebscheibendrehachse (53) sich oberhalb der Tretlagerwelle (21) befindet und
(e) wobei der Achsversatz minimal 70 mm, insbesondere minimal 90 mm, und maximal 175 mm beträgt, insbesondere maximal 120 mm.

2. Fahrrad (10), insbesondere Zweirad, nach Anspruch 1, mit
(a) einem Hilfsantrieb (100),
(b) einem Schaltgetriebe (40), das
(i) eine Schaltgetriebe-Eingangswelle (41) und
(ii) eine Schaltgetriebe-Ausgangswelle (42) hat,
(c) einem Hinterrad (61), und
(d) einem Hinterrad-Zugmitteltrieb (49), der
(i) eine Hinterrad-Antriebsscheibe (51), die, insbesondere drehstarr, mit der Schaltgetriebe-Ausgangswelle (42) mittelbar verbunden ist, aufweist,
(ii) und eine die Hinterrad-Abtriebsscheibe (52) aufweist, die mit dem Hinterrad (61), insbesondere drehstarr, verbunden ist,
(e) wobei ein Hinterradtrieb-Übersetzungsverhältnis (V) des Hinterrad-Zugmitteltriebs (49) betragsmäßig größer als eins ist und ins Langsame übersetzt und
(f) die Tretlagerwelle (21) mit dem Schaltgetriebe (40) über ein Pedalgetriebe (24) verbunden ist.

3. Fahrrad (10) nach Anspruch 2, **dadurch gekennzeichnet, dass** das Pedalgetriebe (24)
(a) ein Zahnradgetriebe oder ein Zugmittelgetriebe, insbesondere ein Zahnriementrieb ist, und
(b) ein Pedalgetriebe-Übersetzungsverhältnis (U) hat, das betragsmäßig kleiner als 1 ist und ins Schnelle übersetzt.

4. Fahrrad (10) nach einem der vorstehenden Ansprüche, **gekennzeichnet durch** eine Schwinge (58), an der das Hinterrad (61) gelagert ist, wobei eine Hinterradantriebsscheiben-Drehachse (53) der Hinterrad-Antriebsscheibe (51) nicht koaxial zu einem Schwingen-Momentandrehpunkt der Schwinge (58) angeordnet ist.

5. Fahrrad (10) nach einem der vorstehenden Ansprüche, **dadurch gekennzeichnet, dass** das Schaltgetriebe (40) zumindest ein schaltbares Teilgetriebe (TG1) aufweist, das insbesondere ein Planetengetriebe ist.

6. Fahrrad (10) nach Anspruch 4, **dadurch gekennzeichnet, dass** das Schaltgetriebe (40) zumindest zwei schaltbare Planetengetriebe (TG1, TG2) aufweist, die in Reihe geschaltet sind.

7. Fahrrad (10) nach einem der vorstehenden Ansprüche, **dadurch gekennzeichnet, dass**
(a) der Hilfsantrieb (100) ein Elektroantrieb ist, der einen Elektromotor (101) und ein Reduziergetriebe (103) hat,
(b) wobei der Elektromotor (101) eine Elektromotorwelle (102) hat,
(c) wobei das Reduziergetriebe (103) eine Reduziergetriebe-Eingangswelle hat, die von der Elektromotorwelle (102) angetrieben wird, und
(d) wobei das Reduziergetriebe (103) eine Reduziergetriebe-Ausgangswelle hat, die insbesondere direkt auf die Schaltgetriebe-Eingangswelle (41) wirkt.

8. Fahrrad (10) nach einem der vorstehenden Ansprüche, **dadurch gekennzeichnet, dass** der Hilfsantrieb (100) direkt auf die Schaltgetriebe-Ausgangswelle (42) oder im Drehmomentfluss dahinter wirkt.

9. Fahrrad (10) nach einem der vorstehenden Ansprüche, **dadurch gekennzeichnet, dass**
(a) die Schaltgetriebeeingangswellen-Drehachse (43) der Schaltgetriebe-Eingangswelle (41) in Fahrtrichtung des Fahrrads (10) vor einer Hinterradantriebsscheiben-Drehachse (53) der Hinterrad-Antriebsscheibe (51) liegt oder koaxial zu ihr angeordnet ist,
(b) eine Elektromotorwellen-Drehachse der Elektromotorwelle (102) oberhalb und in Fahrtrichtung vor der Tretlagerwellen-Drehachse (110) der Tretlagerwelle (21) liegt,
(c) die Elektromotorwellen-Drehachse unterhalb und in Fahrtrichtung vor der Hinterradantriebsscheiben-Drehachse (53) liegt, und/oder
(d) die Hinterradantriebsscheiben-Drehachse (53) oberhalb einer Hinterradabtriebsscheiben-Drehachse der Hinterradabtriebsscheibe (52) liegt.

10. Fahrrad (10) nach einem der vorstehenden Ansprüche, **dadurch gekennzeichnet, dass** die Schaltgetriebe-Eingangswelle (41) in Fahrtrichtung des Fahrrads (10) vor der Tretlagerwelle (21) liegt, insbesondere mindestens 60 mm vor der Tretlagerwelle (21) und/oder maximal 250 mm vor der Tretlagerwelle (21), insbesondere maximal 180 mm, insbesondere maximal 100 mm.

11. Fahrrad (10) nach einem der vorstehenden Ansprüche, **dadurch gekennzeichnet, dass** eine Hinterradantriebsscheiben-Drehachse (53) der Hinterradantriebsscheibe (51)
(a) maximal 80 mm, vorzugsweise maximal 40 mm, vorzugsweise maximal 15 mm bezüglich der Fahrtrichtung hinter einer Tretlagerwellen-Drehachse (110) der Tretlagerwelle (21) und/oder
(b) maximal 120 mm, vorzugsweise maximal 60 mm, vorzugsweise maximal 5 mm bezüglich der Fahrtrichtung vor der Tretlagerwellen-Drehachse (110) befindet.

12. Fahrrad (10) nach einem der vorstehenden Ansprüche, **dadurch gekennzeichnet, dass** die Schaltgetriebe-Ausgangswelle (42) und eine Hinterrad-Antriebsscheibenwelle (54) der Hinterrad-Antriebsscheibe (51) koaxial verlaufen, insbesondere die Hinterrad-Antriebsscheibenwelle (54) der Schaltgetriebe-Ausgangswelle (42) entspricht.

13. Fahrrad (10) nach einem der vorstehenden Ansprüche, **dadurch gekennzeichnet, dass**
(a) eine Schaltachse (115) konzentrisch innerhalb der Schaltgetriebe-Eingangswelle (41) angeordnet ist,
(b) die Schaltachse (115) mittelbar, insbesondere über ein Gehäuse (160) des Schaltgetriebes (40), drehfest mit einem Rahmen (36) des Fahrrads (10) verbunden ist,
(c) die Schaltachse (115) mindestens teilweise hohl ist,
(d) eine Betätigungseinrichtung (181), die mit dem Schaltgetriebe-Aktuator (99) in Verbindung steht, sich mindestens teilweise innerhalb der Schaltachse (115) befindet und dazu eingerichtet ist, mindestens eine Kupplung (Ki) des Schaltgetriebes (40) zu betätigen,
(e) mindestens ein Sonnenrad (81) eines Planetengetriebes über eine Kupplung (Ki) drehfest mit der Schaltachse (115) verbindbar ist, und/oder
(f) die Schaltgetriebe-Eingangswelle (41) zu der Schaltgetriebe-Ausgangswelle (42) koaxial angeordnet ist.

14. Fahrrad (10) nach einem der vorstehenden Ansprüche, **dadurch gekennzeichnet, dass** das Pedalgetriebe (24) mindestens zwei parallel geschaltete Getriebestufen aufweist, wobei während eines Fahrbetriebs über Kupplungen zu einem Zeitpunkt exakt eine der Getriebestufen aktiviert ist.

15. Fahrrad (10) nach einem der vorstehenden Ansprüche, **dadurch gekennzeichnet, dass** die Pedaltrieb-Antriebsscheibe (26) und die Elektromotorwelle (102) mittelbar über ein, insbesondere ein einziges Zugmittel (28) mittelbar mit der Schaltgetriebe-Eingangswelle (41) in drehmomentübertragender Verbindung steht.

## Geänderte Patentansprüche

### Geänderte Patentansprüche gemäss Regel 137(2) EPÜ.

**1.** Fahrrad (10), insbesondere Zweirad, mit
(a) einem Hilfsantrieb (100),
(b) einem Schaltgetriebe (40), das
(i) eine Schaltgetriebe-Eingangswelle (41) und
(ii) eine Schaltgetriebe-Ausgangswelle (42) hat,
(c) einem Hinterrad (61), und
(d) einem Hinterrad-Zugmitteltrieb (49), der
(i) eine Hinterrad-Antriebsscheibe (51), die, insbesondere drehstarr, mit der Schaltgetriebe-Ausgangswelle (42) mittelbar verbunden ist, aufweist,
(ii) und eine die Hinterrad-Abtriebsscheibe (52) aufweist, die mit dem Hinterrad (61), insbesondere drehstarr, verbunden ist,
(e) wobei ein Hinterradtrieb-Übersetzungsverhältnis (V) des Hinterrad-Zugmitteltriebs (49) betragsmäßig größer als eins ist und ins Langsame übersetzt,
**dadurch gekennzeichnet, dass**
(f) das Schaltgetriebe (40) zumindest zwei schaltbare Planetengetriebe (TG1, TG2) aufweist, die in Reihe geschaltet sind.

**2.** Fahrrad (10) nach Anspruch 1, **gekennzeichnet durch**
(a) die Hinterrad-Antriebsscheibe (51), die eine Hinterradantriebsscheiben-Drehachse (53) hat, zum Antreiben eines Hinterrads,
(b) einen Pedalantrieb (20), der eine Tretlagerwelle (21) hat,
(c) wobei die Hinterradantriebscheibendrehachse (53) von der Tretlagerwelle (21) um einen Achsversatz beabstandet ist,
(d) wobei die Hinterradantriebscheibendrehachse (53) sich oberhalb der Tretlagerwelle (21) befindet und
(e) wobei der Achsversatz minimal 70 mm, insbesondere minimal 90 mm, und maximal 175 mm beträgt, insbesondere maximal 120 mm,
(f) wobei die Tretlagerwelle (21) mit dem Schaltgetriebe (40) über ein Pedalgetriebe (24) verbunden ist.

**3.** Fahrrad (10) nach Anspruch 1 oder 2, **dadurch gekennzeichnet, dass** das Pedalgetriebe (24)
(a) ein Zahnradgetriebe oder ein Zugmittelgetriebe, insbesondere ein Zahnriementrieb ist, und
(b) ein Pedalgetriebe-Übersetzungsverhältnis (U) hat, das betragsmäßig kleiner als 1 ist und ins Schnelle übersetzt.

**4.** Fahrrad (10) nach einem der vorstehenden Ansprüche, **gekennzeichnet durch** eine Schwinge (58), an der das Hinterrad (61) gelagert ist, wobei eine Hinterradantriebsscheiben-Drehachse (53) der Hinterrad-Antriebsscheibe (51) nicht koaxial zu einem Schwingen-Momentandrehpunkt der Schwinge (58) angeordnet ist.

**5.** Fahrrad (10) nach einem der vorstehenden Ansprüche, **dadurch gekennzeichnet, dass**
(a) der Hilfsantrieb (100) ein Elektroantrieb ist, der einen Elektromotor (101) und ein Reduziergetriebe (103) hat,
(b) wobei der Elektromotor (101) eine Elektromotorwelle (102) hat,
(c) wobei das Reduziergetriebe (103) eine Reduziergetriebe-Eingangswelle hat, die von der Elektromotorwelle (102) angetrieben wird, und
(d) wobei das Reduziergetriebe (103) eine Reduziergetriebe-Ausgangswelle hat, die insbesondere direkt auf die Schaltgetriebe-Eingangswelle (41) wirkt.

**6.** Fahrrad (10) nach einem der vorstehenden Ansprüche, **dadurch gekennzeichnet, dass** der Hilfsantrieb (100) direkt auf die Schaltgetriebe-Ausgangswelle (42) oder im Drehmomentfluss dahinter wirkt.

**7.** Fahrrad (10) nach Anspruch 5, **dadurch gekennzeichnet, dass**
(a) die Schaltgetriebeeingangswellen-Drehachse (43) der Schaltgetriebe-Eingangswelle (41) in Fahrtrichtung des Fahrrads (10) vor einer Hinterradantriebsscheiben-Drehachse (53) der Hinterrad-Antriebsscheibe (51) liegt oder koaxial zu ihr angeordnet ist,
(b) eine Elektromotorwellen-Drehachse der Elektromotorwelle (102) oberhalb und in Fahrtrichtung vor der Tretlagerwellen-Drehachse (110) der Tretlagerwelle (21) liegt,
(c) die Elektromotorwellen-Drehachse unterhalb und in Fahrtrichtung vor der Hinterradantriebsscheiben-Drehachse (53) liegt, und
(d) die Hinterradantriebsscheiben-Drehachse (53) oberhalb einer Hinterradabtriebsscheiben-Drehachse der Hinterradabtriebsscheibe (52) liegt.

**8.** Fahrrad (10) nach einem der vorstehenden Ansprüche, **dadurch gekennzeichnet, dass** die Schaltgetriebe-Eingangswelle (41) in Fahrtrichtung des Fahrrads (10) vor der Tretlagerwelle (21) liegt, insbesondere mindestens 60 mm vor der Tretlagerwelle (21) und/oder maximal 250 mm vor der Tretlagerwelle (21), insbesondere maximal 180 mm, insbesondere maximal 100 mm.

**9.** Fahrrad (10) nach einem der vorstehenden Ansprüche, **dadurch gekennzeichnet, dass** eine Hinterradantriebsscheiben-Drehachse (53) der Hinterradantriebsscheibe (51)
(a) maximal 80 mm, vorzugsweise maximal 40 mm, vorzugsweise maximal 15 mm bezüglich der Fahrtrichtung hinter einer Tretlagerwellen-Drehachse (110) der Tretlagerwelle (21) und
(b) maximal 120 mm, vorzugsweise maximal 60 mm, vorzugsweise maximal 5 mm bezüglich der Fahrtrichtung vor der Tretlagerwellen-Drehachse (110) befindet.

**10.** Fahrrad (10) nach einem der vorstehenden Ansprüche, **dadurch gekennzeichnet, dass** die Schaltgetriebe-Ausgangswelle (42) und eine Hinterrad-Antriebsscheibenwelle (54) der Hinterrad-Antriebsscheibe (51) koaxial verlaufen, insbesondere die Hinterrad-Antriebsscheibenwelle (54) der Schaltgetriebe-Ausgangswelle (42) entspricht.

**11.** Fahrrad (10) nach einem der vorstehenden Ansprüche, **dadurch gekennzeichnet, dass**
(a) eine Schaltachse (115) konzentrisch innerhalb der Schaltgetriebe-Eingangswelle (41) angeordnet ist,
(b) die Schaltachse (115) mittelbar, insbesondere über ein Gehäuse (160) des Schaltgetriebes (40), drehfest mit einem Rahmen (36) des Fahrrads (10) verbunden ist,
(c) die Schaltachse (115) mindestens teilweise hohl ist,
(d) eine Betätigungseinrichtung (181), die mit dem Schaltgetriebe-Aktuator (99) in Verbindung steht, sich mindestens teilweise innerhalb der Schaltachse (115) befindet und dazu eingerichtet ist, mindestens eine Kupplung (Ki) des Schaltgetriebes (40) zu betätigen,
(e) mindestens ein Sonnenrad (81) eines Planetengetriebes über eine Kupplung (Ki) drehfest mit der Schaltachse (115) verbindbar ist, und
(f) die Schaltgetriebe-Eingangswelle (41) zu der Schaltgetriebe-Ausgangswelle (42) koaxial angeordnet ist.

**12.** Fahrrad (10) nach einem der vorstehenden Ansprüche, **dadurch gekennzeichnet, dass** das Pedalgetriebe (24) mindestens zwei parallel geschaltete Getriebestufen aufweist, wobei während eines Fahrbetriebs über Kupplungen zu einem Zeitpunkt exakt eine der Getriebestufen aktiviert ist.

**13.** Fahrrad (10) nach Anspruch 5, **dadurch gekennzeichnet, dass** eine Pedaltrieb-Antriebsscheibe (26) und die Elektromotorwelle (102) mittelbar über ein, insbesondere ein einziges Zugmittel (28) mittelbar mit der Schaltgetriebe-Eingangswelle (41) in drehmomentübertragender Verbindung steht.

**1.** Fahrrad (10), insbesondere Zweirad, mit
(a) einem Hilfsantrieb (100),
(b) einem Schaltgetriebe (40), das
(i) eine Schaltgetriebe-Eingangswelle (41) und
(ii) eine Schaltgetriebe-Ausgangswelle (42) hat,
(c) einem Hinterrad (61), und
(d) einem Hinterrad-Zugmitteltrieb (49), der
(i) eine Hinterrad-Antriebsscheibe (51), die, insbesondere drehstarr, mit der Schaltgetriebe-Ausgangswelle (42) mittelbar verbunden ist, aufweist,
(ii) und eine die Hinterrad-Abtriebsscheibe (52) aufweist, die mit dem Hinterrad (61), insbesondere drehstarr, verbunden ist,
(e) wobei ein Hinterradtrieb-Übersetzungsverhältnis (V) des Hinterrad-Zugmitteltriebs (49) betragsmäßig größer als eins ist und ins Langsame übersetzt,
**dadurch gekennzeichnet, dass**
(f) eine Schaltachse (115) konzentrisch innerhalb der Schaltgetriebe-Eingangswelle (41) angeordnet ist und
(g) mindestens ein Sonnenrad (81) eines Planetengetriebes über eine Kupplung (Ki) drehfest mit der Schaltachse (115) verbindbar ist.

**2.** Fahrrad (10) nach Anspruch 1, **gekennzeichnet durch**
(a) die Hinterrad-Antriebsscheibe (51), die eine Hinterradantriebsscheiben-Drehachse (53) hat, zum Antreiben eines Hinterrads,
(b) einen Pedalantrieb (20), der eine Tretlagerwelle (21) hat,
(c) wobei die Hinterradantriebscheibendrehachse (53) von der Tretlagerwelle (21) um einen Achsversatz beabstandet ist,
(d) wobei die Hinterradantriebscheibendrehachse (53) sich oberhalb der Tretlagerwelle (21) befindet und
(e) wobei der Achsversatz minimal 70 mm, insbesondere minimal 90 mm, und maximal 175 mm beträgt, insbesondere maximal 120 mm,
(f) wobei die Tretlagerwelle (21) mit dem Schaltgetriebe (40) über ein Pedalgetriebe (24) verbunden ist.

**3.** Fahrrad (10) nach Anspruch 1 oder 2, **dadurch gekennzeichnet, dass** das Pedalgetriebe (24)
(a) ein Zahnradgetriebe oder ein Zugmittelgetriebe, insbesondere ein Zahnriementrieb ist, und
(b) ein Pedalgetriebe-Übersetzungsverhältnis (U) hat, das betragsmäßig kleiner als 1 ist und ins Schnelle übersetzt.

**4.** Fahrrad (10) nach einem der vorstehenden Ansprüche, **gekennzeichnet durch** eine Schwinge (58), an der das Hinterrad (61) gelagert ist, wobei eine Hinterradantriebsscheiben-Drehachse (53) der Hinterrad-Antriebsscheibe (51) nicht koaxial zu einem Schwingen-Momentandrehpunkt der Schwinge (58) angeordnet ist.

**5.** Fahrrad (10) nach einem der vorstehenden Ansprüche, **dadurch gekennzeichnet, dass** das Schaltgetriebe (40) zumindest ein schaltbares Teilgetriebe (TG1) aufweist, das insbesondere ein Planetengetriebe ist.

**6.** Fahrrad (10) nach Anspruch 4, **dadurch gekennzeichnet, dass** das Schaltgetriebe (40) zumindest zwei schaltbare Planetengetriebe (TG1, TG2) aufweist, die in Reihe geschaltet sind.

**7.** Fahrrad (10) nach einem der vorstehenden Ansprüche, **dadurch gekennzeichnet, dass**
(a) der Hilfsantrieb (100) ein Elektroantrieb ist, der einen Elektromotor (101) und ein Reduziergetriebe (103) hat,
(b) wobei der Elektromotor (101) eine Elektromotorwelle (102) hat,
(c) wobei das Reduziergetriebe (103) eine Reduziergetriebe-Eingangswelle hat, die von der Elektromotorwelle (102) angetrieben wird, und
(d) wobei das Reduziergetriebe (103) eine Reduziergetriebe-Ausgangswelle hat, die insbesondere direkt auf die Schaltgetriebe-Eingangswelle (41) wirkt.

**8.** Fahrrad (10) nach einem der vorstehenden Ansprüche, **dadurch gekennzeichnet, dass** der Hilfsantrieb (100) direkt auf die Schaltgetriebe-Ausgangswelle (42) oder im Drehmomentfluss dahinter wirkt.

**9.** Fahrrad (10) nach Anspruch 7, **dadurch gekennzeichnet, dass**
(a) die Schaltgetriebeeingangswellen-Drehachse (43) der Schaltgetriebe-Eingangswelle (41) in Fahrtrichtung des Fahrrads (10) vor einer Hinterradantriebsscheiben-Drehachse (53) der Hinterrad-Antriebsscheibe (51) liegt oder koaxial zu ihr angeordnet ist,
(b) eine Elektromotorwellen-Drehachse der Elektromotorwelle (102) oberhalb und in Fahrtrichtung vor der Tretlagerwellen-Drehachse (110) der Tretlagerwelle (21) liegt,
(c) die Elektromotorwellen-Drehachse unterhalb und in Fahrtrichtung vor der Hinterradantriebsscheiben-Drehachse (53) liegt, und
(d) die Hinterradantriebsscheiben-Drehachse (53) oberhalb einer Hinterradabtriebsscheiben-Drehachse der Hinterradabtriebsscheibe (52) liegt.

**10.** Fahrrad (10) nach einem der vorstehenden Ansprüche, **dadurch gekennzeichnet, dass** die Schaltgetriebe-Eingangswelle (41) in Fahrtrichtung des Fahrrads (10) vor der Tretlagerwelle (21) liegt, insbesondere mindestens 60 mm vor der Tretlagerwelle (21) und/oder maximal 250 mm vor der Tretlagerwelle (21), insbesondere maximal 180 mm, insbesondere maximal 100 mm.

**11.** Fahrrad (10) nach einem der vorstehenden Ansprüche, **dadurch gekennzeichnet, dass** eine Hinterradantriebsscheiben-Drehachse (53) der Hinterradantriebsscheibe (51)
(a) maximal 80 mm, vorzugsweise maximal 40 mm, vorzugsweise maximal 15 mm bezüglich der Fahrtrichtung hinter einer Tretlagerwellen-Drehachse (110) der Tretlagerwelle (21) und
(b) maximal 120 mm, vorzugsweise maximal 60 mm, vorzugsweise maximal 5 mm bezüglich der Fahrtrichtung vor der Tretlagerwellen-Drehachse (110) befindet.

**12.** Fahrrad (10) nach einem der vorstehenden Ansprüche, **dadurch gekennzeichnet, dass** die Schaltgetriebe-Ausgangswelle (42) und eine Hinterrad-Antriebsscheibenwelle (54) der Hinterrad-Antriebsscheibe (51) koaxial verlaufen, insbesondere die Hinterrad-Antriebsscheibenwelle (54) der Schaltgetriebe-Ausgangswelle (42) entspricht.

**13.** Fahrrad (10) nach einem der vorstehenden Ansprüche, **dadurch gekennzeichnet, dass**
(a) die Schaltachse (115) mittelbar, insbesondere über ein Gehäuse (160) des Schaltgetriebes (40), drehfest mit einem Rahmen (36) des Fahrrads (10) verbunden ist,
(b) die Schaltachse (115) mindestens teilweise hohl ist,
(c) eine Betätigungseinrichtung (181), die mit dem Schaltgetriebe-Aktuator (99) in Verbindung steht, sich mindestens teilweise innerhalb der Schaltachse (115) befindet und dazu eingerichtet ist, mindestens eine Kupplung (Ki) des Schaltgetriebes (40) zu betätigen, und
(d) die Schaltgetriebe-Eingangswelle (41) zu der Schaltgetriebe-Ausgangswelle (42) koaxial angeordnet ist.

**14.** Fahrrad (10) nach einem der vorstehenden Ansprüche, **dadurch gekennzeichnet, dass** das Pedalgetriebe (24) mindestens zwei parallel geschaltete Getriebestufen aufweist, wobei während eines Fahrbetriebs über Kupplungen zu einem Zeitpunkt exakt eine der Getriebestufen aktiviert ist.

**15.** Fahrrad (10) nach Anspruch 7, **dadurch gekennzeichnet, dass** eine Pedaltrieb-Antriebsscheibe (26) und die Elektromotorwelle (102) mittelbar über ein, insbesondere ein einziges Zugmittel (28) mittelbar mit der Schaltgetriebe-Eingangswelle (41) in drehmomentübertragender Verbindung steht.
